# EUROPEAN PATENT SPECIFICATION

(11) **EP 3 965 128 B1**
(45) Date of publication and mention of the grant of the patent: **12.11.2025**
(21) Application number: 20818229.5
(22) Date of filing: 03.06.2020
(51) Int. Cl.: H01M 10/0567, H01M 10/0568, H01M 10/052, H01M 10/054, H01G 11/62, H01G 11/64, H01G 11/06, H01G 11/60

(54) **NONAQUEOUS ELECTROLYTE SOLUTION, AND NONAQUEOUS ELECTROLYTE BATTERY**
WASSERFREIE ELEKTROLYTLÖSUNG UND BATTERIE MIT WASSERFREIEM ELEKTROLYT
SOLUTION ÉLECTROLYTIQUE NON AQUEUSE ET BATTERIE À ÉLECTROLYTE NON AQUEUX

(30) Priority: 05.06.2019 JP 2019105456
(43) Date of publication of application: 09.03.2022
(73) Proprietor: Central Glass Co., Ltd., Yamaguchi 755-0001 (JP)
(72) Inventor: KUBO, Kenji, Ube-shi, Yamaguchi 755-0001 (JP); KAWABATA, Wataru, Ube-shi, Yamaguchi 755-0001 (JP); IKEDA, Yuta, Ube-shi, Yamaguchi 755-0001 (JP); MORINAKA, Takayoshi, Ube-shi, Yamaguchi 755-0001 (JP); TAKAHASHI, Mikihiro, Ube-shi, Yamaguchi 755-0001 (JP)
(74) Representative: Manitz Finsterwald Patent- und Rechtsanwaltspartnerschaft mbB
(86) International application number: PCT/JP2020/022015
(87) International publication number: WO 2020/246522

(56) References cited:
- WO-A1-2010/137571
- WO-A1-2010/137571
- WO-A1-2016/189769
- WO-A1-2016/189769
- KR-A- 20190 057 953
- KR-A- 20190 057 953

## Description

### TECHNICAL FIELD

The present invention relates to a nonaqueous electrolytic solution and a nonaqueous electrolytic solution battery.

### BACKGROUND ART

In a battery which is an electrochemical device, in recent years, attention has been paid to a power storage system for small and high energy density applications such as information related equipment and communication equipment, that is, a personal computer, a video camera, a digital camera, a mobile phone, and a smartphone, and a power storage system for large and power applications such as an electric vehicle, a hybrid vehicle, an auxiliary power supply for a fuel cell vehicle auxiliary power supply, and power storage. One of the candidates is a nonaqueous electrolytic solution battery such as a lithium ion battery, which has a high energy density and a high voltage and can obtain a high capacity, and research and development have been actively conducted at present.

As a nonaqueous electrolytic solution used in a nonaqueous electrolytic solution battery, a nonaqueous electrolytic solution obtained by dissolving a fluorine-containing electrolyte such as lithium hexafluorophosphate (hereinafter referred to as LiPF₆), lithium bis(fluorosulfonylimide) (hereinafter referred to as LiFSI), or lithium tetrafluoroborate (hereinafter referred to as LiBF₄) as a solute in a solvent such as cyclic carbonate, chain carbonate, or an ester is often used because the nonaqueous electrolytic solution is suitable for obtaining a battery having a high voltage and a high capacity. However, a nonaqueous electrolytic solution battery using such a nonaqueous electrolytic solution is not necessarily satisfactory in battery characteristics such as cycle characteristics and output characteristics.

For example, in the case of a lithium ion secondary battery, when lithium cations are inserted into a negative electrode at the time of initial charging, the negative electrode and the lithium cations or the negative electrode and an electrolytic solution solvent react with each other to form a coating containing lithium oxide, lithium carbonate, or lithium alkyl carbonate as a main component on a surface of the negative electrode. The coating on the surface of the electrode is called a Solid Electrolyte Interface (SEI), and the properties thereof greatly affect the battery performance, such as preventing further reductive decomposition of the solvent and preventing deterioration of the battery performance. Similarly, it is known that a coating of decomposition products is also formed on the surface of a positive electrode, which also plays an important role such as preventing oxidative decomposition of the solvent and preventing gas generation inside the battery.

In order to improve battery characteristics such as cycle characteristics and low-temperature characteristics (0°C or lower), it is important to form a stable SEI having high ion conductivity and low electron conductivity. An attempt to positively form a good SEI by adding a small amount (usually 0.001 mass% or more and 10 mass% or less) of a compound called an additive to an electrolytic solution has been widely made.

For example, Patent Literature 1 discloses that an additive having a specific structure containing a functional group having two different types of hetero atoms, a phosphorus atom and a sulfur atom, improves the life characteristics and storage characteristics of a battery at a high temperature. Further prior art nonaqueous electrolytic solutions and/or nonaqueous electrolytic solution batteries are disclosed in Patent Literatures 2 to 4.

### CITATION LIST

### PATENT LITERATURE

Patent Literature 1: WO2019/103434
Patent Literature 2: KR 2019 0057953 A
Patent Literature 3: WO 2010/137571 A1
Patent Literature 4: WO 2016/189769 A1

### SUMMARY OF INVENTION

### TECHNICAL PROBLEM

Although the electrolytic solution containing an additive having a specific structure described in Patent Literature 1 can surely improve the life characteristics and storage characteristics of the battery at a high temperature, it has been revealed by the study of the present inventors that, at a concentration (specifically, 1 weight%) as disclosed in examples thereof, further improvement is desired from the viewpoint of a retention rate of the battery capacity after a long-term cycle at a high temperature and the increase in resistance at a low temperature after high-temperature storage.

The present invention has been made in view of the above circumstances, and an object of the present invention is to provide a nonaqueous electrolytic solution and a nonaqueous electrolytic solution battery that can exhibit an effect of improving a capacity retention rate after a long-term cycle at a high temperature (60°C or higher) and an effect of preventing an increase in resistance at a low temperature (0°C or lower, particularly, -20°C or lower) after high-temperature storage in a balanced manner.

### SOLUTION TO PROBLEM

The present inventors have made intensive studies in view of the above problems, and as a result, have found that the effect of improving the capacity retention rate after a long-term cycle at a high temperature and the effect of preventing an increase in resistance at a low temperature after high-temperature storage can be exhibited in a balanced manner by using a salt compound represented by the general formula (1) as an additive in a nonaqueous electrolytic solution in a content in a specific range with respect to a total amount of the nonaqueous electrolytic solution.

That is, the present inventors have found that the object described above can be achieved by the following configuration.

<1> A nonaqueous electrolytic solution, containing:
   a salt compound represented by the following general formula (1); a solute; and a nonaqueous organic solvent, in which
   a content of the salt compound represented by the general formula (1) with respect to a total amount of the nonaqueous electrolytic solution is 0.003 mass% to 0.070 mass%. 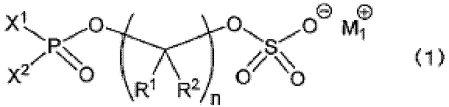
   [In the general formula (1), R¹ and R² each independently represent a hydrogen atom, a fluorine atom, or an alkyl group having 1 to 6 carbon atoms, and any hydrogen atom of the alkyl group may be substituted with a fluorine atom.
   X¹ and X² both represent a fluorine atom.
   M₁⁺ represents an alkali metal cation, an ammonium ion, or an organic cation.
   n represents an integer 1 to 6. When n is an integer of 2 or more, a plurality of R¹ may be the same as or different from each other, and a plurality of R² may be the same as or different from each other.]
<2> The nonaqueous electrolytic solution according to <1>, containing: a compound represented by the following general formula (2). 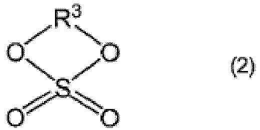 [In the general formula (2), R³ represents a hydrocarbon group having 2 to 5 carbon atoms.]
<3> The nonaqueous electrolytic solution according to <1> or <2>, containing: a compound represented by the following general formula (3). 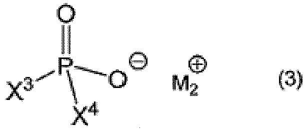 [In the general formula (3), X³ and X⁴ both represent a fluorine atom. M₂⁺ represents an alkali metal cation, an ammonium ion, or an organic cation.]
<4> The nonaqueous electrolytic solution according to any one of <1> to <3>, in which the nonaqueous organic solvent contains at least one selected from the group consisting of a cyclic carbonate and a chain carbonate.
<5> The nonaqueous electrolytic solution according to any one of <1> to <4>, in which the solute is an ionic salt containing a pair of at least one cation selected from the group consisting of an alkali metal ion and an alkaline earth metal ion, and at least one anion selected from the group consisting of a hexafluorophosphate anion, a tetrafluoroborate anion, a trifluoromethanesulfonate anion, a fluorosulfonate anion, a bis(trifluoromethanesulfonyl)imide anion, a bis(pentafluoroethanesulfonyl)imide anion, a bis(fluorosulfonyl)imide anion, a (trifluoromethanesulfonyl)(fluorosulfonyl)imide anion, a bis(difluorophosphonyl)imide anion, a (difluorophosphonyl)(fluorosulfonyl)imide anion, and a (difluorophosphonyl)(trifluoromethanesulfonyl)imide anion.
<6> A nonaqueous electrolytic solution battery, containing: a positive electrode; and a negative electrode having at least one selected from the group consisting of a negative electrode material containing a lithium metal and a negative electrode material that can occlude and release lithium, sodium, potassium, or magnesium; and the nonaqueous electrolytic solution according to any one of <1> to <5>.

### ADVANTAGEOUS EFFECTS OF INVENTION

According to the present invention, it is possible to provide a nonaqueous electrolytic solution and a nonaqueous electrolytic solution battery that can exhibit an effect of improving a capacity retention rate after a long-term cycle at a high temperature (60°C or higher) and an effect of preventing an increase in resistance at a low temperature (0°C or lower, particularly, -20°C or lower) after high-temperature storage in a balanced manner.

### BRIEF DESCRIPTION OF DRAWINGS

[FIG. 1] FIG. 1 is a plot of a high-temperature cycle capacity retention rate and a low-temperature internal resistance after high-temperature storage with respect to a concentration of a component (I) according to Examples and Comparative Examples.
[FIG. 2] FIG. 2 is a plot of the high-temperature cycle capacity retention rate and the low-temperature internal resistance after high-temperature storage with respect to the concentration of the component (I) according to Examples and Comparative Examples.
[FIG. 3] FIG. 3 is a plot of the high-temperature cycle capacity retention rate and the low-temperature internal resistance after high-temperature storage with respect to the concentration of the component (I) according to Examples and Comparative Examples.
[FIG. 4] FIG. 4 is a plot of the high-temperature cycle capacity retention rate and the low-temperature internal resistance after high-temperature storage with respect to the concentration of the component (I) according to Examples and Comparative Examples.
[FIG. 5] FIG. 5 is a plot of the high-temperature cycle capacity retention rate and the low-temperature internal resistance after high-temperature storage with respect to the concentration of the component (I) according to Examples and Comparative Examples.
[FIG. 6] FIG. 6 is a plot of the high-temperature cycle capacity retention rate and the low-temperature internal resistance after high-temperature storage with respect to the concentration of the component (I) according to Examples and Comparative Examples.

### DESCRIPTION OF EMBODIMENTS

Each configuration and a combination thereof in the following embodiments are examples, and addition, omission, replacement, and other modifications of the configuration are possible without departing from the gist of the present invention. The present invention is not limited to the embodiments.

In the present specification, the expression "to" is used to include the numerical values described therebefore and thereafter as the lower limit value and the upper limit value.

### [1. Nonaqueous Electrolytic Solution]

A nonaqueous electrolytic solution according to the present invention contains a salt compound represented by the following general formula (1), a solute, and a nonaqueous organic solvent, and a content of the salt compound represented by the general formula (1) with respect to a total amount of the nonaqueous electrolytic solution is 0.003 mass% to 0.070 mass%.

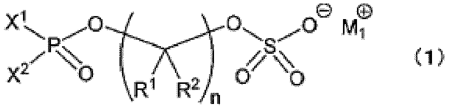

[In the general formula (1), R¹ and R² each independently represent a hydrogen atom, a fluorine atom, or an alkyl group having 1 to 6 carbon atoms, and any hydrogen atom of the alkyl group may be substituted with a fluorine atom.

X¹ and X² both represent a fluorine atom.

M₁⁺ represents an alkali metal cation, an ammonium ion, or an organic cation.

n represents an integer 1 to 6. When n is an integer of 2 or more, a plurality of R¹ may be the same as or different from each other, and a plurality of R² may be the same as or different from each other.]

### <(I) Salt Compound Represented by General Formula (1)>

The salt compound represented by the general formula (1) is described. The salt compound represented by the general formula (1) is also referred to as component (I).

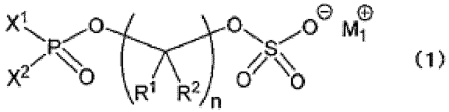

[In the general formula (1), R¹ and R² each independently represent a hydrogen atom, a fluorine atom, or an alkyl group having 1 to 6 carbon atoms, and any hydrogen atom of the alkyl group may be substituted with a fluorine atom.

X¹ and X² both represent a fluorine atom.

M₁⁺ represents an alkali metal cation, an ammonium ion, or an organic cation.

n represents an integer 1 to 6. When n is an integer of 2 or more, a plurality of R¹ may be the same as or different from each other, and a plurality of R² may be the same as or different from each other.]

In the general formula (1), R¹ and R² each independently represent a hydrogen atom, a fluorine atom, or an alkyl group having 1 to 6 carbon atoms.

Examples of the alkyl group in the case where R¹ and R² represent an alkyl group having 1 to 6 carbon atoms include a linear or branched alkyl group, and specific examples thereof include a methyl group, an ethyl group, an n-propyl group, an i-propyl group, an n-butyl group, an s-butyl group, a t-butyl group, an n-pentyl group, and an n-hexyl group.

Any hydrogen atom of the alkyl group may be substituted with a fluorine atom. Examples of the alkyl group in which any hydrogen atom is substituted with a fluorine atom include a trifluoromethyl group, a difluoromethyl group, a fluoromethyl group, a 2,2,2-trifluoroethyl group, a 2,2-difluoroethyl group, and a 2-fluoroethyl group.

The alkyl group is preferably a fluorine-substituted or unsubstituted alkyl group having 1 to 4 carbon atoms, more preferably a methyl group, an ethyl group, an i-propyl group, an n-butyl group, or a trifluoromethyl group, and particularly preferably a methyl group.

R¹ and R² are each independently preferably a hydrogen atom, a fluorine atom, or a fluorine-substituted or unsubstituted alkyl group having 1 to 4 carbon atoms, more preferably a hydrogen atom or a methyl group, and it is particularly preferable that R¹ and R² are each a hydrogen atom.

In the general formula (1), X¹ and X² both are a fluorine atom.

In the general formula (1), M₁⁺ represents an alkali metal cation, an ammonium ion (NH₄⁺), or an organic cation.

Examples of the alkali metal cation represented by M₁⁺ include a lithium cation, a sodium cation, and a potassium cation.

Examples of the organic cation represented by M₁⁺ include a methylammonium ion (MeNH₃⁺), a dimethylammonium ion (Me₂NH₂⁺), a trimethylammonium ion (Me₃NH⁺), an ethylammonium ion (EtNH₃⁺), a diethylammonium ion (Et₂NH₂⁺), a triethylammonium ion (Et₃NH⁺), a tri-n-propylammonium ion (n-Pr₃NH⁺), a tri-i-propylammonium ion (i-Pr₃NH⁺), an n-butylammonium ion (n-BuNH₃⁺), a tri-n-butylammonium ion (n-Bu₃NH⁺), a sec-butylammonium ion (sec-BuNH₃⁺), a tert-butylammonium ion (t-BuNH₃⁺), a diisopropylethylammonium ion (i-Pr₂EtNH⁻), a phenylammonium ion (PhNH₃⁺), a diphenylammonium ion (Ph₂NH₂⁺), a triphenylammonium ion (Ph₃NH⁺), a tetramethylammonium ion (Me₄N⁺), a tetraethylammonium ion (Et₄N⁺), a trimethylethylammonium ion (Me₃EtN⁺), a tetra-n-propylammonium ion (n-Pr₄N⁺), a tetra-i-propylammonium ion (i-Pr₄N⁺), and a tetra-n-butylammonium ion (n-Bu₄N⁺).

M₁⁺ is preferably an alkali metal cation, and more preferably a lithium cation.

In the general formula (1), n represents an integer of 1 to 6.

n is preferably an integer of 1 to 4, more preferably 2 or 3, and particularly preferably 2.

Specifically, the anion in the salt compound represented by the general formula (1) is preferably at least one selected from the group consisting of the following formulae (1-1) to (1-18). It is more preferably at least one selected from the group consisting of formulae (1-1), (1-3), (1-5), (1-6), (1-13) and (1-15), and still more preferably at least one selected from the group consisting of formulae (1-1), (1-3) and (1-6).

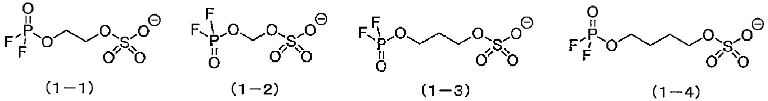

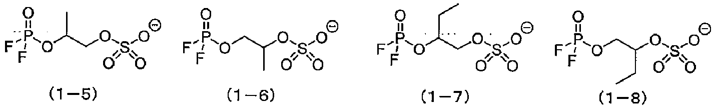

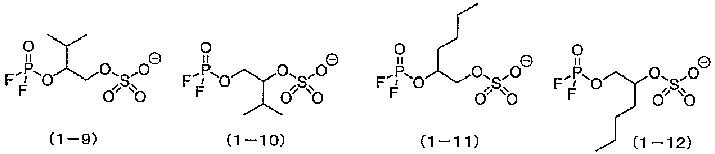

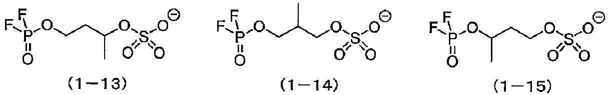

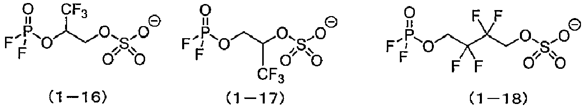

A synthesis method of the salt compound represented by the general formula (1) is not particularly limited, and various known synthesis methods can be used.

For example, the salt compound can be obtained by reacting a cyclic sulfuric acid ester with a hydroxide of an alkali metal to ring-opening the cyclic sulfuric acid ester, and then further subjecting the cyclic sulfuric acid ester to an addition reaction with phosphorus oxyhalide.

Here, when X¹ and X² in the salt compound represented by the general formula (1) are fluorine atoms, examples of the phosphorus oxyhalide include phosphorus oxychlorodifluoride, phosphorus oxyfluoride, and phosphorus oxychloride. When phosphorus oxychloride is used, chlorine atoms in the reaction product may be converted into fluorine atoms by using a known fluoride (for example, HF, NaF and KF).

The content of the salt compound represented by the general formula (1) with respect to the total amount of the nonaqueous electrolytic solution according to the present invention is preferably 0.003 mass% (30 mass ppm) to 0.1 mass% (1000 mass ppm), preferably 0.0045 mass% (45 mass ppm) to 0.070 mass% (700 mass ppm), more preferably 0.006 mass% (60 mass ppm) to 0.060 mass% (600 mass ppm), and still more preferably 0.0075 mass% (75 mass ppm) to 0.055 mass% (550 mass ppm).

The content of the salt compound represented by the general formula (1) with respect to the total amount of the nonaqueous electrolytic solution according to the present invention is 0.003 mass% (30 mass ppm) to 0.070 mass% (700 mass ppm).

The salt compound represented by the general formula (1) may be used alone or in combination of two or more thereof.

### <(II) Solute>

The nonaqueous electrolytic solution according to the present invention contains a solute.

The solute is preferably an ionic salt, and is preferably, for example, an ionic salt containing a pair of at least one cation selected from the group consisting of an alkali metal ion and an alkaline earth metal ion, and at least one anion selected from the group consisting of a hexafluorophosphate anion, a tetrafluoroborate anion, a trifluoromethanesulfonate anion, a fluorosulfonate anion, a bis(trifluoromethanesulfonyl)imide anion, a bis(pentafluoroethanesulfonyl)imide anion, a bis(fluorosulfonyl)imide anion, a (trifluoromethanesulfonyl)(fluorosulfonyl)imide anion, a bis(difluorophosphonyl)imide anion, a (difluorophosphonyl)(fluorosulfonyl)imide anion, and a (difluorophosphonyl)(trifluoromethanesulfonyl)imide anion.

The cation of the ionic salt as the solute is preferably lithium, sodium, potassium, or magnesium, and the anion is preferably at least one selected from the group consisting of a hexafluorophosphate anion, a tetrafluoroborate anion, a trifluoromethanesulfonate anion, a bis(trifluoromethanesulfonyl)imide anion, a bis(fluorosulfonyl)imide anion, a bis(difluorophosphonyl)imide anion, and a (difluorophosphonyl)(fluorosulfonyl)imide anion, from the viewpoint of high solubility in a nonaqueous organic solvent and electrochemical stability thereof.

The preferable concentration of these solutes is not particularly limited, but the lower limit is 0.5 mol/L or more, preferably 0.7 mol/L or more, and more preferably 0.9 mol/L or more, and the upper limit is 2.5 mol/L or less, preferably 2.2 mol/L or less, and more preferably 2.0 mol/L or less. When the concentration is 0.5 mol/L or more, it is possible to prevent a deterioration in cycle characteristics and output characteristics of the nonaqueous electrolytic solution battery due to a decrease in ion conductivity. When the concentration is 2.5 mol/L or less, it is possible to prevent a decrease in the ion conductivity and a deterioration in the cycle characteristics and the output characteristics of the nonaqueous electrolytic solution battery due to an increase in the viscosity of the nonaqueous electrolytic solution. These solutes may be used alone or in combination.

When the content of the ionic salt exemplified as the solute in the nonaqueous electrolytic solution is less than 0.5 mol/L which is the lower limit of the preferable concentration of the solute, the ionic salt can exhibit the negative electrode coating forming effect and the positive electrode protecting effect as "other additives".

### <(III) Nonaqueous Organic Solvent>

The type of the nonaqueous organic solvent used in the nonaqueous electrolytic solution of the present invention is not particularly limited, and any nonaqueous organic solvent can be used. Specifically, the nonaqueous organic solvent is preferably at least one selected from the group consisting of ethyl methyl carbonate (hereinafter, referred to as "EMC"), dimethyl carbonate (hereinafter, referred to as "DMC"), diethyl carbonate (hereinafter, referred to as "DEC"), methyl propyl carbonate, ethyl propyl carbonate, methyl butyl carbonate, 2,2,2-trifluoroethyl methyl carbonate, 2,2,2-trifluoroethyl ethyl carbonate, 2,2,2-trifluoroethyl propyl carbonate, bis(2,2,2-trifluoroethyl)carbonate, 1,1,1,3,3,3-hexafluoro-1-propyl methyl carbonate, 1,1,1,3,3,3-hexafluoro-1-propyl ethyl carbonate, 1,1,1,3,3,3-hexafluoro-1-propyl propyl carbonate, bis(1,1,1,3,3,3-hexafluoro-1-propyl)carbonate, ethylene carbonate (hereinafter, referred to as "EC"), propylene carbonate (hereinafter, referred to as "PC"), butylene carbonate, fluoroethylene carbonate (hereinafter, referred to as "FEC"), difluoroethylene carbonate, methyl acetate, ethyl acetate, methyl propionate, ethyl propionate, methyl 2-fluoropropionate, ethyl 2-fluoropropionate, diethyl ether, dibutyl ether, diisopropyl ether, 1,2-dimethoxyethane, tetrahydrofuran, 2-methyltetrahydrofuran, furan, tetrahydropyran, 1,3-dioxane, 1,4-dioxane, N,N-dimethylformamide, acetonitrile, propionitrile, dimethylsulfoxide, sulfolane, γ-butyrolactone, and γ-valerolactone.

It is preferable that the nonaqueous organic solvent contains at least one selected from the group consisting of a cyclic carbonate and a chain carbonate, from the viewpoint of excellent cycle characteristics at a high temperature. It is preferable that the nonaqueous organic solvent contains an ester, from the viewpoint of excellent input and output characteristics at a low temperature.

Specific examples of the cyclic carbonate include EC, PC, butylene carbonate, and FEC, and among them, at least one selected from the group consisting of EC, PC, and FEC is preferable.

Specific examples of the chain carbonate include EMC, DMC, DEC, methyl propyl carbonate, ethyl propyl carbonate, 2,2,2-trifluoroethyl methyl carbonate, 2,2,2-trifluoroethyl ethyl carbonate, 1,1,1,3,3,3-hexafluoro-1-propyl methyl carbonate, and 1,1,1,3,3,3-hexafluoro-1-propyl ethyl carbonate, and among them, at least one selected from the group consisting of EMC, DMC, DEC, and methyl propyl carbonate is preferable.

Specific examples of the ester include methyl acetate, ethyl acetate, methyl propionate, ethyl propionate, methyl 2-fluoropropionate, and ethyl 2-fluoropropionate.

The nonaqueous electrolytic solution of the present invention may also contain a polymer, and is generally called a polymer solid electrolyte. The polymer solid electrolyte also includes those containing a nonaqueous organic solvent as a plasticizer.

The polymer is not particularly limited as long as the polymer is an aprotic polymer that can dissolve the salt compound, the solute, and other additives described below. Examples thereof include a polymer having polyethylene oxide in a main chain or a side chain, a homopolymer or copolymer of polyvinylidene fluoride, a methacrylic acid ester polymer, and polyacrylonitrile. When a plasticizer is added to these polymers, an aprotic nonaqueous organic solvent is preferable among the nonaqueous organic solvents described above.

### <Other Additives>

As long as the gist of the present invention is not impaired, generally used additive components may be further added to the nonaqueous electrolytic solution of the present invention at any ratio.

The nonaqueous electrolytic solution of the present invention preferably contains any of the compounds represented by the following general formulae (2) to (6) from the viewpoint of further improving the capacity retention rate after a long-term cycle at a high temperature and preventing an increase in resistance at a low temperature after high-temperature storage, and more preferably contains at least one of the compound represented by the general formula (2) and the compound represented by the general formula (3).

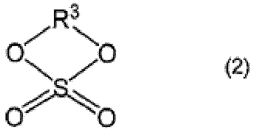

[In the general formula (2), R³ represents a hydrocarbon group having 2 to 5 carbon atoms.]

In the general formula (2), R³ represents a hydrocarbon group having 2 to 5 carbon atoms. Examples of the hydrocarbon group represented by R³ include a linear or branched alkylene group, an alkenylene group, and an alkynylene group.

Specific examples of the alkylene group in the case where R³ represents an alkylene group include an ethylene group, a n-propylene group, an i-propylene group, a n-butylene group, a s-butylene group, a t-butylene group, a n-pentylene group, and a -CH₂CH(C₃H7)- group.

Specific examples of the alkenylene group in the case where R³ represents an alkenylene group include an ethenylene group and a propenylene group.

Specific examples of the alkynylene group in the case where R³ represents an alkynylene group include an ethynylene group and a propynylene group.

Not according to the present invention, the hydrocarbon group represented by R³ may contain a hetero atom between carbon-carbon atom bonds. Examples of the hetero atom include an oxygen atom, a nitrogen atom and a sulfur atom.

Not according to the present invention, in the hydrocarbon group represented by R³, any hydrogen atom may be substituted with a halogen atom. Examples of the hydrocarbon group in which any hydrogen atom is substituted with a fluorine atom include a tetrafluoroethylene group, a 1,2-difluoroethylene group, a 2,2-difluoroethylene group, a fluoroethylene group, and a (trifluoromethyl)ethylene group.

According to the present invention, R³ is preferably an unsubstituted alkylene group having 2 to 3 carbon atoms, and more preferably an ethylene group.

When the nonaqueous electrolytic solution of the present invention contains the compound represented by the general formula (2), the content of the compound represented by the general formula (2) in the nonaqueous electrolytic solution is preferably 0.01 mass% or more and 8.0 mass% or less with respect to the total amount of the nonaqueous electrolytic solution.

When the nonaqueous electrolytic solution of the present invention contains the compound represented by the general formula (2), the nonaqueous electrolytic solution may contain only one kind of the compound represented by the general formula (2), or may contain two or more kinds of the compound represented by the general formula (2).

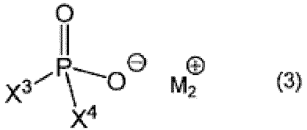

[In the general formula (3), X³ and X⁴ both represent a fluorine atom. M₂⁺ represents an alkali metal cation, an ammonium ion, or an organic cation.]

In the general formula (3), X³ and X⁴ both are a fluorine atom.

In the general formula (3), M₂⁺ represents an alkali metal cation, an ammonium ion (NH₄⁺), or an organic cation.

Examples of the alkali metal cation represented by M₂⁺ include a lithium cation, a sodium cation, and a potassium cation.

Examples of the organic cation represented by M₂⁺ include a methylammonium ion (MeNH₃⁺), a dimethylammonium ion (Me₂NH₂⁺), a trimethylammonium ion (Me₃NH⁺), an ethylammonium ion (EtNH₃⁺), a diethylammonium ion (Et₂NH₂⁺), a triethylammonium ion (Et₃NH⁺), a tri-n-propylammonium ion (n-Pr₃NH⁺), a tri-i-propylammonium ion (i-Pr₃NH⁺), an n-butylammonium ion (n-BuNH₃⁺), a tri-n-butylammonium ion (n-BuNH₃⁺), a sec-butylammonium ion (sec-BuNH₃⁺), a tert-butylammonium ion (t-BuNH₃⁺), a diisopropylethylammonium ion (i-Pr₂EtNH⁻), a phenylammonium ion (PhNH₃⁺), a diphenylammonium ion (Ph₂NH₂⁺), a triphenylammonium ion (Ph₃NH⁺), a tetramethylammonium ion (Me₄N⁺), a tetraethylammonium ion (Et₄N⁺), a trimethylethylammonium ion (Me₃EtN⁺), a tetra-n-propylammonium ion (n-Pr₄N⁺), a tetra-i-propylammonium ion (i-Pr₄N⁺), and a tetra-n-butylammonium ion (n-Bu₄N⁺).

M₂⁺ is preferably an alkali metal cation, and more preferably a lithium cation.

When the nonaqueous electrolytic solution of the present invention contains the compound represented by the general formula (3), the content of the compound represented by the general formula (3) in the nonaqueous electrolytic solution is preferably 0.01 mass% or more and 8.0 mass% or less with respect to the total amount of the nonaqueous electrolytic solution.

When the nonaqueous electrolytic solution of the present invention contains the compound represented by the general formula (3), the nonaqueous electrolytic solution may contains only one kind of the compound represented by the general formula (3), or may contain two or more kinds of the compound represented by the general formula (3).

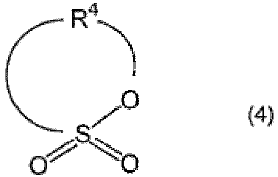

[In the general formula (4), R⁴ represents a hydrocarbon group having 2 to 6 carbon atoms. A hetero atom may be contained between carbon-carbon atom bonds in the hydrocarbon group. Any hydrogen atom of the hydrocarbon group may be substituted with a halogen atom.]

In the general formula (4), R⁴ represents a hydrocarbon group having 2 to 6 carbon atoms. Examples of the hydrocarbon group represented by R⁴ include a linear or branched alkylene group, an alkenylene group, and an alkynylene group.

Specific examples of the alkylene group in the case where R⁴ represents the alkylene group include an ethylene group, a n-propylene group, an i-propylene group, a n-butylene group, a s-butylene group, a t-butylene group, a n-pentylene group, a -CH₂CH(C₃H₇)- group, and a n-hexylene group.

Specific examples of the alkenylene group in the case where R⁴ represents the alkenylene group include an ethenylene group and a propenylene group.

Specific examples of the alkynylene group in the case where R⁴ represents the alkynylene group include a propynylene group.

The hydrocarbon group represented by R⁴ may contain a hetero atom between carbon-carbon atom bonds. Examples of the hetero atom include an oxygen atom, a nitrogen atom and a sulfur atom.

In the hydrocarbon group represented by R⁴, any hydrogen atom may be substituted with a halogen atom. Examples of the hydrocarbon group in which any hydrogen atom is substituted with a fluorine atom include a tetrafluoroethylene group, a 1,2-difluoroethylene group, a 2,2-difluoroethylene group, a fluoroethylene group, and a (trifluoromethyl)ethylene group.

R⁴ is preferably an unsubstituted alkylene group having 3 to 4 carbon atoms, and more preferably a propylene group.

When the nonaqueous electrolytic solution of the present invention contains the compound represented by the general formula (4), the content of the compound represented by the general formula (4) in the nonaqueous electrolytic solution is preferably 0.01 mass% or more and 8.0 mass% or less with respect to the total amount of the nonaqueous electrolytic solution.

When the nonaqueous electrolytic solution of the present invention contains the compound represented by the general formula (4), the nonaqueous electrolytic solution may contain only one kind of the compound represented by the general formula (4), or may contain two or more kinds of the compound represented by the general formula (4).

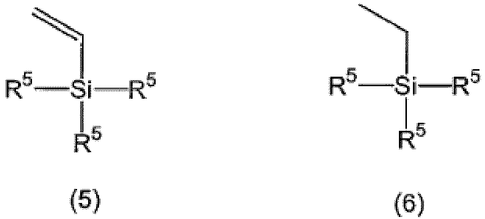

[In the general formulae (5) and (6), each R⁵ independently represents a substituent having at least one of an unsaturated bond and an aromatic ring.

R⁵ is preferably a group selected from an alkenyl group, an alkynyl group, an aryl group, an alkenyloxy group, an alkynyloxy group, and an aryloxy group.

The alkenyl group is preferably a group selected from an ethenyl group and a 2-propenyl group (allyl group), and the alkynyl group is preferably an ethynyl group. The aryl group is preferably a phenyl group, a 2-methylphenyl group, a 4-methylphenyl group, a 4-fluorophenyl group, a 4-tert-butylphenyl group, or a 4-tert-amylphenyl group.

The alkenyloxy group is preferably a group selected from a vinyloxy group and a 2-propenyloxy group (allyloxy group). The alkynyloxy group is preferably a propargyloxy group, and the aryloxy group is preferably a phenoxy group, a 2-methylphenoxy group, a 4-methylphenoxy group, a 4-fluorophenoxy group, a 4-tert-butylphenoxy group, or a 4-tert-amylphenoxy group.

At least two of the three R⁵ in the general formulae (5) and (6) are preferably an ethenyl group, an ethynyl group, or both, from the viewpoint of high durability improvement effect.

When the nonaqueous electrolytic solution of the present invention contains the compound represented by the general formula (5), the content of the compound represented by the general formula (5) in the nonaqueous electrolytic solution is preferably 0.01 mass% or more and 8.0 mass% or less with respect to the total amount of the nonaqueous electrolytic solution.

When the nonaqueous electrolytic solution of the present invention contains the compound represented by the general formula (5), the nonaqueous electrolytic solution may contain only one kind of the compound represented by the general formula (5), or may contain two or more kinds of the compound represented by the general formula (5).

When the nonaqueous electrolytic solution of the present invention contains the compound represented by the general formula (6), the content of the compound represented by the general formula (6) in the nonaqueous electrolytic solution is preferably 0.01 mass% or more and 8.0 mass% or less with respect to the total amount of the nonaqueous electrolytic solution.

When the nonaqueous electrolytic solution of the present invention contains the compound represented by the general formula (6), the nonaqueous electrolytic solution may contain only one kind of the compound represented by the general formula (6), or may contain two or more kinds of the compound represented by the general formula (6).

Specific examples of the "other additives" other than the compound represented by the general formula (2) to (6) include compounds having an overcharge preventing effect, a negative electrode coating forming effect, and a positive electrode protecting effect, such as cyclohexylbenzene, cyclohexylfluorobenzene, fluorobenzene (hereinafter, also referred to as FB), biphenyl, difluoroanisole, tert-butylbenzene, tert-amylbenzene, 2-fluorotoluene, 2-fluorobiphenyl, vinylene carbonate, dimethylvinylene carbonate, vinylethylene carbonate, fluoroethylene carbonate, methylpropargyl carbonate, ethylpropargyl carbonate, dipropargyl carbonate, maleic anhydride, succinic anhydride, methylenemethanedisulfonate, dimethylenemethanedisulfonate, trimethylenemethanedisulfonate, methyl methanesulfonate, lithium difluorobis(oxalato)phosphate (hereinafter, also referred to as LDFBOP), sodium difluorobis(oxalato)phosphate, potassium difluorobis(oxalato)phosphate, lithium difluorooxalato borate (hereinafter, also referred to as LDFOB), sodium difluorooxalato borate, potassium difluorooxalato borate, lithium bis(oxalato) borate, sodium bis(oxalato) borate, potassium bis(oxalato) borate, lithium tetrafluorooxalato phosphate (hereinafter, also referred to as LTFOP), sodium tetrafluorooxalato phosphate, potassium tetrafluorooxalato phosphate, lithium tris(oxalato)phosphate, sodium tris(oxalato)phosphate, potassium tris(oxalato)phosphate, lithium ethylfluorophosphate (hereinafter, also referred to as LEFP), lithium propylfluorophosphate, lithium fluorophosphate, ethenesulfonyl fluoride (hereinafter, also referred to as ESF), trifluoromethanesulfonyl fluoride (hereinafter, also referred to as TSF), methanesulfonyl fluoride (hereinafter, also referred to as MSF), and phenyl difluorophosphate (hereinafter, also referred to as PDFP).

The content of the other additives in the nonaqueous electrolytic solution is preferably 0.01 mass% or more and 8.0 mass% or less with respect to the total amount of the nonaqueous electrolytic solution.

It is preferable to contain at least one of the compounds represented by the general formulae (2) to (6) as the other additive from the viewpoint of further improving the capacity retention rate after a long-term cycle at a high temperature and preventing an increase in resistance at a low temperature after high-temperature storage, and it is more preferable to contain at least one of the compound represented by the general formula (2) and the compound represented by the general formula (3).

It is also preferable to contain at least one compound selected from a lithium salt of a boron complex having an oxalic acid group, a lithium salt of a phosphorus complex having an oxalic acid group, a compound having an O=S-F bond, and a compound having an O=P-F bond. It is preferable to contain the above compound from the viewpoint of not only improving the capacity retention rate after a long-term cycle at a further high temperature and preventing an increase in resistance at a low temperature after high-temperature storage, but also reducing the elution of the Ni component from the electrode into the electrolytic solution when a Ni-containing electrode is used.

It is more preferable that the lithium salt of a boron complex having an oxalic acid group is lithium difluorooxalato borate, and the lithium salt of a phosphorus complex having an oxalic acid group is at least one selected from the group consisting of lithium tetrafluorooxalato phosphate and lithium difluorobis(oxalato)phosphate, because the effect of preventing the elution of the Ni component from the positive electrode is particularly excellent in addition to the improvement of the capacity retention rate after a long-term cycle at a higher temperature and the prevention of the increase in resistance at a lower temperature after high-temperature storage.

Examples of the compound having an O=S-F bond include lithium fluorosulfonate, lithium bis(fluorosulfonyl)imide, lithium (trifluoromethanesulfonyl)(fluorosulfonyl)imide, propyl fluorosulfate, phenyl fluorosulfate, 4-fluorophenyl fluorosulfonate, 4-tert-butylphenyl fluorosulfonate, 4-tert-amylphenyl fluorosulfonate, ethenesulfonyl fluoride, trifluoromethanesulfonyl fluoride, methanesulfonyl fluoride, benzenesulfonyl fluoride, fluoro-4-fluorophenylsulfonyl, fluoro-4-tert-butylphenylsulfonyl, fluoro-4-tert-amylphenylsulfonyl, and fluoro-2-methylphenylsulfonyl. Among them, at least one selected from the group consisting of lithium fluorosulfonate, lithium bis(fluorosulfonyl)imide, and lithium (trifluoromethanesulfonyl)(fluorosulfonyl)imide is particularly preferable because the elution of the Ni component from the positive electrode can be prevented in addition to the improvement of the capacity retention rate after a long-term cycle at a higher temperature and the prevention of the increase in resistance at a lower temperature after high-temperature storage.

Examples of the compound having an O=P-F bond include lithium ethylfluorophosphate, lithium bis(difluorophosphonyl)imide, phenyl difluorophosphate, and a compound represented by the general formula (3) such as lithium difluorophosphate. Among them, at least one selected from the group consisting of lithium difluorophosphate, lithium ethylfluorophosphate, and lithium bis(difluorophosphonyl)imide is preferable because the productivity is high and the production cost is low while having an effect of improving the capacity retention rate after a long-term cycle at a higher temperature, preventing the increase in resistance at a lower temperature after high-temperature storage, and preventing elution of the Ni component from the positive electrode, as compared to the lithium salt of a boron complex having an oxalic acid group, the lithium salt of a phosphorus complex having an oxalic acid group, and the compound having an O=S-F bond.

Among the other additives described above, there is an additive overlapping with the solute, but when used as the other additive, the additive is added at a concentration lower than the solute concentration described above.

Further, as in the case of being used in a nonaqueous electrolytic solution battery called a polymer battery, the nonaqueous electrolytic solution can also be used after being quasi-solidified by a gelling agent or a crosslinked polymer.

### <Method for Preparing Nonaqueous Electrolytic Solution>

A method for preparing the nonaqueous electrolytic solution of the present invention is described. The nonaqueous electrolytic solution can be prepared by dissolving (II) a solute and (I) a salt compound represented by the general formula (1) in (III) a nonaqueous organic solvent.

In the operation of dissolving the (II) solute in the (III) nonaqueous organic solvent, it is effective to prevent a liquid temperature of the nonaqueous organic solvent from exceeding 40°C from the viewpoint of preventing deterioration of the nonaqueous organic solvent and the solute. This is because, by setting the liquid temperature to 40°C or lower, generation of a free acid such as hydrogen fluoride (HF) due to reaction and decomposition of the solute with moisture in the system can be prevented when the solute is dissolved, and as a result, decomposition of the nonaqueous organic solvent can also be prevented. It is also effective to add a solute little by little to perform dissolution and preparation from the viewpoint of preventing the generation of a free acid such as HF.

When dissolving the solute in the nonaqueous organic solvent, the dissolution may be performed while cooling the nonaqueous organic solvent, and the liquid temperature is not particularly limited, but is preferably -20°C to 40°C, and more preferably 0 to 40°C.

When the (I) salt compound represented by the general formula (1) or other additives are added, the liquid temperature of the nonaqueous electrolytic solution is preferably controlled to -10°C or higher and 40°C or lower. The upper limit of the liquid temperature is more preferably 30°C or lower, and particularly preferably 20°C or lower.

The nonaqueous electrolytic solution of the present invention can be preferably used in a nonaqueous electrolytic solution battery (preferably a secondary battery).

### [2. Nonaqueous Electrolytic Solution Battery]

The nonaqueous electrolytic solution battery of the present invention includes at least (a) the nonaqueous electrolytic solution of the present invention, (b) a positive electrode, and (c) a negative electrode having at least one selected from the group consisting of a negative electrode material containing a lithium metal and a negative electrode material that can occlude and release lithium, sodium, potassium, or magnesium. Furthermore, it is preferable to include (d) a separator, an exterior body, or the like.

### <(b) Positive Electrode>

The (b) positive electrode preferably contains at least one oxide and/or a polyanion compound as a positive electrode active material.

### [Positive Electrode Active Material]

In the case of a lithium ion secondary battery in which cations in a nonaqueous electrolytic solution are mainly lithium, the positive electrode active material constituting the (b) positive electrode is not particularly limited as long as the positive electrode active material is various chargeable and dischargeable materials, and examples thereof include a (A) lithium transition metal composite oxide having a layered structure and containing at least one metal selected from nickel, manganese, and cobalt, a (B) lithium manganese composite oxide having a spinel structure, a (C) lithium-containing olivine phosphate, and a (D) lithium-excess layered transition metal oxide having a layered halite type structure.

### ((A) Lithium Transition Metal Composite Oxide)

Examples of the (A) lithium transition metal composite oxide containing at least one metal selected from nickel, manganese, and cobalt and having a layered structure, which is an example of the positive electrode active material, include a lithium-cobalt composite oxide, a lithium-nickel composite oxide, a lithium-nickel-cobalt composite oxide, a lithium-nickel-cobalt-aluminum composite oxide, a lithium-cobalt-manganese composite oxide, a lithium-nickel-manganese composite oxide, and a lithium-nickel-manganese-cobalt composite oxide. In addition, transition metal atoms as a main component of the lithium transition metal composite oxide may be partially substituted with other elements such as Al, Ti, V, Cr, Fe, Cu, Zn, Mg, Ga, Zr, Si, B, Ba, Y, and Sn.

Specific examples of the lithium-cobalt composite oxide and the lithium-nickel composite oxide include LiCoO₂, LiNiO₂, lithium cobaltate to which a different element such as Mg, Zr, Al, or Ti is added (LiCo_{0.98}Mg_{0.01}Zr_{0.01}O₂, LiCo_{0.98}Mg_{0.01}Al_{0.01}O₂, LiCo_{0.975}Mg_{0.01}Zr_{0.005}Al_{0.01}O₂), and lithium cobaltate having a rare earth compound fixed on a surface and described in WO 2014/034043. In addition, as described in JP-A-2002-151077 or the like, a LiCoO₂ particle powder in which a part of the particle surface is coated with aluminum oxide may be used.

The lithium-nickel-cobalt composite oxide and the lithium-nickel-cobalt-aluminum composite oxide are represented by the general formula [11].

LiₐNi_{1-b-c}Co_{b}M¹¹_{c}O₂ [11]

In the general formula [11], M¹¹ is at least one element selected from the group consisting of Al, Fe, Mg, Zr, Ti, and B, a satisfies 0.9 ≤ a ≤ 1.2, and b and c satisfy the conditions of 0.1 ≤ b ≤ 0.3 and 0 ≤ c ≤ 0.1.

These can be prepared, for example, in accordance with a production method described in JP-A-2009-137834 or the like. Specific examples thereof include LiNi_{0.8}Co_{0.2}O₂, LiNi_{0.85}Co_{0.10}Al_{0.05}O₂, LiNi_{0.87}Co_{0.10}Al_{0.03}O₂, and LiNi_{0.6}Co_{0.3}Al_{0.1}O₂.

Specific examples of the lithium-cobalt-manganese composite oxide and lithium-nickel-manganese composite oxide include LiNi_{0.5}Mn_{0.5}O₂ and LiCo_{0.5}Mn_{0.5}O₂.

Examples of the lithium-nickel-manganese-cobalt composite oxide include a lithium-containing composite oxide represented by the general formula [12].

Li_{d}NiₑMn_{f}Co_{g}M¹²ₕO₂ [12]

In the general formula [12], M¹² is at least one element selected from the group consisting of Al, Fe, Mg, Zr, Ti, B, and Sn, d satisfies 0.9 ≤ d ≤ 1.2, and e, f, g, and h satisfy the conditions of e + f + g + h = 1, 0 ≤ e ≤ 0.7, 0 ≤ f ≤ 0.5, 0 ≤ g ≤ 0.5, and h ≥ 0.

The lithium-nickel-manganese-cobalt composite oxide preferably contains manganese in the range of the general formula [12] in order to enhance the structural stability and improve the safety of the lithium secondary battery at a high temperature, and more preferably further contains cobalt in the range of the general formula [12] in order to enhance the high-rate characteristics of the lithium ion secondary battery.

Specific examples thereof include Li[Ni_{1/3}Mn_{1/3}Co_{1/3}]O₂, Li[Ni_{0.45}Mn_{0.35}Co_{0.2}]O₂, Li[Ni_{0.5}Mn_{0.3}Co_{0.2}]O₂, Li[Ni_{0.6}Mn_{0.2}Co_{0.2}]O₂, Li[Ni_{0.49}Mn_{0.3}Co_{0.2}Zr_{0.01}]O₂, and Li[Ni_{0.49}Mn_{0.3}Co_{0.2}Mg_{0.01}]O₂, which have a charging and discharging region of 4.3V or more.

### ((B) Lithium Manganese Composite Oxide Having Spinel Structure)

Examples of the (B) lithium-manganese composite oxide having a spinel structure, which is an example of the positive electrode active material, include a spinel-type lithium-manganese composite oxide represented by the general formula [13].

Liⱼ(Mn₂₋ₖM¹³ₖ)O₄ [13]

In the general formula [13], M¹³ is at least one metal element selected from the group consisting of Ni, Co, Fe, Mg, Cr, Cu, Al, and Ti, j satisfies 1.05 ≤ j ≤ 1.15, and k satisfies 0 ≤ k ≤ 0.20.

Specific examples thereof include LiMnO₂, LiMn₂O₄, LiMn_{1.95}Al_{0.05}O₄, LiMn_{1.9}Al_{0.1}O₄, LiMn_{1.9}Ni_{0.1}O₄ and LiMn_{1.5}Ni_{0.5}O₄.

### ((C) Lithium-containing Olivine Phosphate)

Examples of the (C) lithium-containing olivine phosphate, which is an example of the positive electrode active material, include those represented by the general formula [14].

LiFe₁₋ₙM¹⁴ₙPO₄ [14]

In the general formula [14], M¹⁴ is at least one selected from Co, Ni, Mn, Cu, Zn, Nb, Mg, Al, Ti, W, Zr, and Cd, and n satisfies 0 ≤ n ≤ 1.

Specific examples thereof include LiFePO₄, LiCoPO₄, LiNiPO₄ and LiMnPO₄, and among them, LiFePO₄ and/or LiMnPO₄ are preferable.

### ((D) Lithium-excess Layered Transition Metal Oxide)

Examples of the (D) lithium-excess layered transition metal oxide having a layered halite type structure, which is an example of the positive electrode active material, include those represented by the general formula [15].

xLiM¹⁵O₂·(1-x)Li₂M¹⁶O₃ [15]

In the general formula [15], x is a number satisfying 0 < x < 1, M¹⁵ is at least one metal element having an average oxidation number of 3⁺, and M¹⁶ is at least one metal element having an average oxidation number of 4⁺, M¹⁵ is preferably one metal element selected from trivalent Mn, Ni, Co, Fe, V, and Cr, but may be a divalent and tetravalent metal with an average oxidation number of trivalent.

In the general formula [15], M¹⁶ is preferably one or more metal elements selected from Mn, Zr, and Ti. Specific examples thereof include 0.5[LiNi_{0.5}Mn_{0.5}O₂]·0.5[Li₂MnO₃], 0.5[LiNi_{1/3}Co_{1/3}Mn_{1/3}O₂]·0.5[Li₂MnO₃], 0.5[LiNi_{0.375}Co_{0.25}Mn_{0.375}O₂]·0.5[Li₂MnO₃], 0.5[LiNi_{0.375}Co_{0.125}Fe_{0.125}Mn_{0.375}O₂]·0.5[Li₂MnO₃], and 0.45[LiNi_{0.375}Co_{0.25}Mn_{0.375}O₂]·0.10[Li₂TiO₃]·0.45[Li₂MnO₃].

There has been known that the positive electrode active material represented by the general formula [15] exhibits a high capacity by high-voltage charging of 4.4V (based on Li) or more (for example, US Patent No. 7135252).

These positive electrode active materials can be prepared in accordance with, for example, the production methods described in JP-A-2008-270201, WO2013/118661, JP-A-2013-030284.

The positive electrode active material contains at least one selected from (A) to (D) as a main component, and examples of other components include transition element chalcogenide such as FeS₂, TiS₂, TiO₂, V₂O₅, MoO₃, and MoS₂, conductive polymers such as polyacetylene, polyparaphenylene, polyaniline, and polypyrrole, activated carbon, polymers that generate radicals, and carbon materials.

### [Positive Electrode Current Collector]

The (b) positive electrode has a positive electrode current collector. As the positive electrode current collector, for example, aluminum, stainless steel, nickel, titanium, or an alloy thereof can be used.

### [Positive Electrode Active Material Layer]

In the (b) positive electrode, for example, a positive electrode active material layer is formed on at least one surface of the positive electrode current collector.

The positive electrode active material layer includes, for example, the positive electrode active material, a binder, and, if necessary, a conductive agent.

Examples of the binder include polytetrafluoroethylene, polyvinylidene fluoride, tetrafluoroethylene-perfluoroalkyl vinyl ether copolymer, styrene-butadiene rubber (SBR), carboxymethyl cellulose, methyl cellulose, cellulose acetate phthalate, hydroxypropyl methyl cellulose, and polyvinyl alcohol.

Examples of the conductive agent include carbon materials such as acetylene black, Ketjenblack, furnace black, carbon fiber, graphite (granular graphite or flake graphite), and fluorinated graphite. In the positive electrode, acetylene black or Ketjenblack having low crystallinity is preferably used.

### <(c) Negative Electrode>

The negative electrode material is not particularly limited, but in the case of a lithium battery or a lithium ion battery, a lithium metal, an alloy or an intermetallic compound of a lithium metal and another metal, various carbon materials (artificial graphite, natural graphite, etc.), a metal oxide, a metal nitride, tin (single), a tin compound, silicon (single), a silicon compound, activated carbon, a conductive polymerare used.

Examples of the carbon material include graphitizable carbon, non-graphitizable carbon (hard carbon) having a (002) plane spacing of 0.37 nm or more, and graphite having a (002) plane spacing of 0.34 nm or less. More specifically, examples thereof include pyrolytic carbon, cokes, glassy carbon fiber, an organic polymer compound fired body, activated carbon, and carbon blacks. Among them, the cokes include pitch coke, needle coke, petroleum coke. The organic polymer compound fired body is obtained by firing and carbonizing a phenol resin, a furan resin, or the like at an appropriate temperature. The carbon material is preferable because a change in the crystal structure due to insertion and extraction of lithium is very small, and thus a high energy density can be obtained and excellent cycle characteristics can be obtained.

A shape of the carbon material may be any of a fibrous shape, a spherical shape, a granular shape, and a flake-like shape. In addition, amorphous carbon or a graphite material having a surface coated with amorphous carbon is more preferable because the reactivity between the material surface and the nonaqueous electrolytic solution is decreased.

The (c) negative electrode preferably contains at least one negative electrode active material.

### [Negative Electrode Active Material]

In the case of a lithium ion secondary battery in which cations in the nonaqueous electrolytic solution are mainly lithium, the negative electrode active material constituting the (c) negative electrode can be doped and undoped with lithium ions, and examples thereof include those containing at least one selected from (E) a carbon material having a lattice plane (002) with a d value of 0.340 nm or less in X-ray diffraction, (F) a carbon material having a lattice plane (002) with a d value exceeding 0.340 nm in X-ray diffraction, (G) an oxide of one or more metals selected from Si, Sn, and Al, (H) one or more metals selected from Si, Sn, and Al, an alloy containing these metals, or an alloy of these metals or alloys with lithium, and (I) lithium titanium oxide. These negative electrode active materials can be used alone or in combination of two or more.

### ((E) Carbon Material Having Lattice Plane (002) with d value of 0.340 nm or less in X-ray Diffraction)

Examples of the (E) carbon material having a lattice plane (002) with a d value of 0.340 nm or less in X-ray diffraction, which is an example of the negative electrode active material, include pyrolytic carbons, cokes (for example, pitch coke, needle coke, petroleum coke), graphites, an organic polymer compound fired body (for example, those obtained by firing and carbonizing a phenol resin, a furan resin at an appropriate temperature), a carbon fiber, activated carbon, and these may be graphitized. The carbon material are those having a (002) plane spacing (d002) of 0.340 nm or less as measured by an X-ray diffraction method, and among them, graphite having a true density of 1.70 g/cm³ or more or a high crystalline carbon material having properties close to that of graphite is preferable.

### ((F) Carbon Material Having Lattice Plane (002) with d value Exceeding 0.340 nm in X-ray Diffraction)

Examples of the (F) carbon material having a lattice plane (002) with a d value exceeding 0.340 nm in X-ray diffraction, which is an example of the negative electrode active material, include amorphous carbon, which is a carbon material whose stacking order hardly changes even when heat-treated at a high temperature of 2000°C or higher. Examples thereof include non-graphitizable carbon (hard carbon), mesocarbon microbeads (MCMB) fired at 1500°C or lower, and mesophase-pitch-based carbon fiber s (MCF). Carbotron (registered trademark) P or the like manufactured by Kureha Corporation is a representative example thereof.

### ((G) Oxide of one or more Metals Selected from Si, Sn, and Al)

Examples of the (G) oxide of one or more metals selected from Si, Sn, and Al, which is an example of the negative electrode active material, include silicon oxide and tin oxide, which can be doped and undoped with lithium ions.

There is SiOx, or the like, having a structure in which ultrafine particles of Si are dispersed in SiO₂. When this material is used as the negative electrode active material, charging and discharging are smoothly performed since Si that reacts with Li is ultrafine particles, whereas the SiOₓ particles having the structure described above themselves have a small surface area, and thus the coating properties and the adhesiveness to a current collector of a negative electrode mixture layer when this material is formed as a composition (paste) for forming the negative electrode active material layer are also good.

Since SiOₓ has a large volume change due to charging and discharging, it is possible to achieve both high capacity and good charging and discharging cycle characteristics by using SiOₓ and graphite of the negative electrode active material (E) in combination with the negative electrode active material at a specific ratio.

### ((H) One or More Metals Selected from Si, Sn, and Al, Alloy Containing These Metals, or Alloy of These Metals or Alloys with Lithium)

Examples of (H) one or more metals selected from Si, Sn, and Al, an alloy containing these metals, or an alloy of these metals or alloys with lithium, which is an example of the negative electrode active material, include metals such as silicon, tin and aluminum, silicon alloys, tin alloys and aluminum alloys, and materials in which these metals and alloys are alloyed with lithium during charging and discharging can also be used.

Preferred specific examples thereof include single metals (for example, powdery metals) such as silicon (Si) and tin (Sn), the metal alloys, compounds containing the metals, and alloys containing tin (Sn) and cobalt (Co) in the metals, described in WO 2004/100293, JP-A-2008-016424. When the metal is used for an electrode, a high charging capacity can be exhibited, and expansion and contraction of the volume due to charging and discharging are relatively small, which is preferable. When these metals are used for a negative electrode of a lithium ion secondary battery, these metals are known to exhibit high charging capacity since these metals are alloyed with Li at the time of charging, which is also preferable.

Further, for example, a negative electrode active material formed of a silicon pillar having a submicron diameter, a negative electrode active material formed of a fiber composed of silicon described in WO2004/042851, WO2007/083155 may be used.

### ((I) Lithium Titanium Oxide)

Examples of the (I) lithium titanium oxide, which is an example of the negative electrode active material, include lithium titanate having a spinel structure and lithium titanate having a ramsdellite structure.

Examples of the lithium titanate having a spinel structure include Li_{4+α}Ti₅O₁₂ (α changes within a range of 0 ≤ α ≤ 3 by a charging and discharging reaction). Examples of the lithium titanate having a ramsdellite structure include Li_{2+β}Ti₃O₇ (β changes within a range of 0 ≤ β ≤ 3 by a charging and discharging reaction). These negative electrode active materials can be prepared, for example, according to the production methods described in JP-A-2007-018883, JP-A-2009-176752.

For example, in the case of a sodium ion secondary battery in which cations in the nonaqueous electrolytic solution are mainly sodium, hard carbon and oxides such as TiO₂, V₂O₅, and MoO₃ are used as the negative electrode active material. For example, in the case of a sodium ion secondary battery in which cations in the nonaqueous electrolytic solution are mainly sodium, a sodium-containing transition metal composite oxide such as NaFeO₂, NaCrO₂, NaNiO₂, NaMnO₂, and NaCoO₂, a mixture of a plurality of transition metals such as Fe, Cr, Ni, Mn, and Co in the sodium-containing transition metal composite oxide, the sodium-containing transition metal composite oxide in which a part of the transition metal of the sodium-containing transition metal composite oxide is replaced with a metal other than other transition metals, a phosphate compound of a transition metal such as Na₂FeP₂O₇ and NaCo₃(PO₄)₂P₂O₇, sulfides such as TiS₂ and FeS₂, conductive polymers such as polyacetylene, polyparaphenylene, polyaniline, and polypyrrole, activated carbon, polymers that can generate radicals, and a carbon material is used as the positive electrode active material.

### [Negative Electrode Current Collector]

The (c) negative electrode includes a negative electrode current collector. As the negative electrode current collector, for example, copper, stainless steel, nickel, titanium, or an alloy thereof can be used.

### [Negative Electrode Active Material Layer]

In the (c) negative electrode, for example, a negative electrode active material layer is formed on at least one surface of the negative electrode current collector.

The negative electrode active material layer includes, for example, the negative electrode active material, a binder, and, if necessary, a conductive agent.

Examples of the binder include polytetrafluoroethylene, polyvinylidene fluoride, tetrafluoroethylene-perfluoroalkyl vinyl ether copolymer, styrene-butadiene rubber (SBR), carboxymethyl cellulose, methyl cellulose, cellulose acetate phthalate, hydroxypropyl methyl cellulose, and polyvinyl alcohol.

Examples of the conductive agent include carbon materials such as acetylene black, Ketjenblack, furnace black, carbon fiber, graphite (granular graphite or flake graphite), and fluorinated graphite.

### <Method for Producing Electrodes ((b) Positive Electrode and (c) Negative Electrode)>

The electrode can be obtained, for example, by dispersing and kneading an active material, a binder, and, if necessary, a conductive agent in a predetermined blending amount in a solvent such as N-methyl-2-pyrrolidone (NMP) or water, applying the obtained paste to a current collector, and drying the paste to form an active material layer. The obtained electrode is preferably compressed by a method such as roll pressing to be adjusted to an electrode having an appropriate density.

### <(d) Separator>

The nonaqueous electrolytic solution battery includes a (d) separator. As the separator for preventing the contact between the (b) positive electrode and the (c) negative electrode, a nonwoven fabric or a porous sheet formed of polyolefin such as polypropylene or polyethylene, cellulose, paper, glass fiber, or the like is used. These films are preferably made microporous so that the nonaqueous electrolytic solution permeates therethrough and ions easily permeate therethrough.

Examples of the polyolefin separator include a film which electrically insulates a positive electrode and a negative electrode and through which lithium ions can pass, such as a microporous polymer film, for example, a porous polyolefin film. As a specific example of the porous polyolefin film, for example, a porous polyethylene film may be used alone or a laminate of a porous polyethylene film and a porous polypropylene film may be used as a multilayer film. In addition, a composite film of a porous polyethylene film and a polypropylene film may be used.

### <Exterior Body>

In constituting the nonaqueous electrolytic solution battery, as an exterior body of the nonaqueous electrolytic solution battery, for example, a metal can of a coin shape, a cylindrical shape, a square shape, or the like, or a laminate exterior body can be used. Examples of the metal can material include a nickel-plated steel plate, a stainless steel plate, a nickel-plated stainless steel plate, aluminum or an alloy thereof, nickel, and titanium.

As the laminate exterior body, for example, an aluminum laminate film, a SUS laminate film, a laminate film such as polypropylene or polyethylene coated with silica, or the like can be used.

The configuration of the nonaqueous electrolytic solution battery according to the present embodiment is not particularly limited, but may be a configuration in which an electrode element in which a positive electrode and a negative electrode are arranged to face each other and a nonaqueous electrolytic solution are contained in the exterior body. The shape of the nonaqueous electrolytic solution battery is not particularly limited, but an electrochemical device having a coin shape, a cylindrical shape, a square shape, an aluminum laminate sheet shape, or the like is assembled from each of the above elements.

### [Example]

Hereinafter, the present invention will be described in more detail with reference to Examples, but the present invention is not limited to these descriptions.

### [Synthesis of Salt Compound Represented by General Formula (1)]

### [Synthesis Example 1: Synthesis of Salt Compound (1-1-Li)]

To a 500 mL borosilicate glass reactor equipped with a stirrer, 50.1 g (404 mmol, 1 equivalent) of ethylene sulfate (manufactured by Tokyo Chemical Industry Co., Ltd.) and 101.3 g of ethyl methyl carbonate were added and stirred. The solution was cooled to 5°C, and then 22.3 g of lithium hydroxide (anhydrous, manufactured by Tokyo Chemical Industry Co., Ltd., 929 mmol, 2.3 equivalents) was added thereto. Thereafter, the mixture was stirred at 40°C for 12 hours, and the reaction solution was analyzed by ¹H-NMR to confirm that ethylene sulfate was not detected. Next, this solution was cooled to 5°C, and 48.6 g (404 mmol, 1.0 equivalent) of phosphorus oxychlorodifluoride was added thereto over 1 hour, followed by stirring at room temperature (20°C) for 3 hours. The obtained reaction solution was filtered under a reduced pressure, and the filtrate was concentrated with an evaporator at a temperature of 50°C under a reduced pressure of 1 kPa to 5 kPa to obtain 81.4 g (351 mmol, yield: 87%) of a salt compound (1-1-Li) having an anion represented by the formula (1-1).

### [Synthesis Example 2: Synthesis of Salt Compound (1-3-Li)]

To a 200 mL borosilicate glass reactor equipped with a stirrer, 10.0 g (72 mmol, 1 equivalent) of 1,3-propylene sulfate (1,3,2-dioxathiane-2,2-dioxide, manufactured by Tokyo Chemical Industry Co., Ltd.) and 30.1 g of ethyl methyl carbonate were added and stirred. The solution was cooled to 5°C, and then 4.0 g of lithium hydroxide (anhydrous, manufactured by Tokyo Chemical Industry Co., Ltd., 167 mmol, 2.3 equivalents) was added thereto. Thereafter, the mixture was stirred at 40°C for 12 hours, and the reaction solution was analyzed by ¹H-NMR to confirm that 1,3-propylene sulfate was not detected. Next, this solution was cooled to 5°C, and 8.7 g (72 mmol, 1.0 equivalent) of phosphorus oxychlorodifluoride was added thereto over 30 minutes, followed by stirring at room temperature (20°C) for 3 hours. The obtained reaction solution was filtered under a reduced pressure, and the filtrate was concentrated with an evaporator at a temperature of 50°C under a reduced pressure of 1 kPa to 5 kPa to obtain 14.8 g (60 mmol, yield 83%) of a salt compound (1-3 Li) having an anion represented by the formula (1-3).

### [Synthesis of Salt Compound (1-6-Li)]

To a 200 mL borosilicate glass reactor equipped with a stirrer, 10.2 g (74 mmol, 1 equivalent) of 1,2-propylene sulfate (1,3,2-dioxathiolane-4-methyl-2,2-dioxide, manufactured by Tokyo Chemical Industry Co., Ltd.) and 30.0 g of ethyl methyl carbonate were added and stirred. The solution was cooled to 5°C, and then 4.1 g of lithium hydroxide (anhydrous, manufactured by Tokyo Chemical Industry Co., Ltd., 170 mmol, 2.3 equivalents) was added thereto. Thereafter, the mixture was stirred at 40°C for 12 hours, and the reaction solution was analyzed by ¹H-NMR to confirm that 1,2-propylene sulfate was not detected. Next, this solution was cooled to -10°C, 8.9 g (74 mmol, 1.0 equivalent) of phosphorus oxychlorodifluoride was added thereto over 1 hour, followed by stirring at 0°C for 3 hours. The obtained reaction solution was filtered under a reduced pressure, and the filtrate was concentrated with an evaporator at a temperature of 50°C under a reduced pressure of 1 kPa to 5 kPa to obtain 14.3 g (58 mmol, yield 79%) of a salt compound (1-6-Li) having an anion represented by the formula (1-6).

The structure of the salt compound represented by the general formula (1) obtained in the above Synthesis Example is shown below.

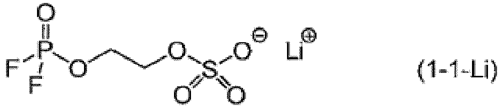

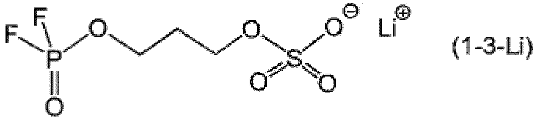

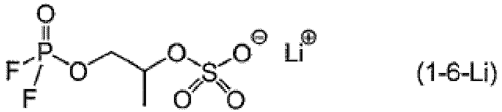

### [Preparation of Nonaqueous Electrolytic Solution According to Examples and Comparative Examples]

### <Example 1-1>

### (Preparation of Nonaqueous Electrolytic Solution No. 1-1)

A mixed solvent of ethylene carbonate, dimethyl carbonate, and ethyl methyl carbonate in a volume ratio of 2.5:4:3.5 was used as a nonaqueous organic solvent, and LiPF₆ was added as a solute to the solvent to have a concentration of 1.0 mol/L. The addition was performed with care so that a liquid temperature was in a range of 20°C to 30°C.

Next, the salt compound (1-1-Li) was dissolved so as to have a concentration of 0.005 mass% (50 mass ppm) with respect to the total amount of the nonaqueous electrolytic solution. The above preparation was also performed while maintaining the liquid temperature in the range of 20°C to 30°C.

The preparation conditions of the nonaqueous electrolytic solution are shown in Table 1. Hereinafter, "-" in all tables indicates that the compound is not added.

### <Examples 1-2 to 1-5>

### (Preparation of Nonaqueous Electrolytic Solutions Nos. 1-2 to 1-5)

Nonaqueous electrolytic solutions Nos. 1-2 to 1-5 were prepared in the same manner as in the preparation of the nonaqueous electrolytic solution No. 1-1, except that the concentration of the salt compound (1-1-Li) was changed as shown in Table 1.

### <Comparative Example 0>

### (Preparation of Comparative Nonaqueous Electrolytic Solution No. 0)

A comparative nonaqueous electrolytic solution No. 0 was prepared in the same manner as in the nonaqueous electrolytic solution No. 1-1 except that the salt compound (1-1-Li) was not added.

### <Comparative Examples 1-1 to 1-4>

### (Comparative Nonaqueous Electrolytic Solutions Nos. 1-1 to 1-4)

Comparative nonaqueous electrolytic solutions Nos. 1-1 to 1-4 were prepared in the same manner as in the nonaqueous electrolytic solution No. 1-1, except that the concentration of the salt compound (1-1-Li) was changed to outside the range of the present invention as shown in Table 1.

### <Examples 2-1 to 2-5 and Comparative Examples 2-1 to 2-4>

### (Preparation of Nonaqueous Electrolytic Solutions Nos. 2-1 to 2-5 and Comparative Electrolytic Solutions Nos. 2-1 to 2-4)

Nonaqueous electrolytic solutions Nos. 2-1 to 2-5 and comparative electrolytic solutions Nos. 2-1 to 2-4 were prepared in the same manner as in the preparation of the nonaqueous electrolytic solutions Nos. 1-1 to 1-5 and the comparative electrolytic solutions Nos. 1-1 to 1-4, except that the salt compound (1-3-Li) was used instead of the salt compound (1-1-Li) as shown in Table 2.

### <Examples 3-1 to 3-5 and Comparative Examples 3-1 to 3-4>

### (Preparation of Nonaqueous Electrolytic Solutions Nos. 3-1 to 3-5 and Comparative Electrolytic Solutions Nos. 3-1 to 3-4)

Nonaqueous electrolytic solutions Nos. 3-1 to 3-5 and comparative electrolytic solutions Nos. 3-1 to 3-4 were prepared in the same manner as in the preparation of the nonaqueous electrolytic solutions Nos. 1-1 to 1-5 and the comparative electrolytic solutions Nos. 1-1 to 1-4, except that the salt compound (1-6-Li) was used instead of the salt compound (1-1-Li) as shown in Table 3.

### <Examples 4-1 to 4-5, Comparative Examples 4-1 to 4-4, and Comparative Example 0-1>

### (Preparation of Nonaqueous Electrolytic Solutions Nos. 4-1 to 4-5, Comparative Electrolytic Solutions Nos. 4-1 to 4-4, and Comparative Electrolytic Solution No. 0-1)

Nonaqueous electrolytic solutions Nos. 4-1 to 4-5, comparative electrolytic solutions Nos. 4-1 to 4-4, and comparative electrolytic solution No. 0-1 were prepared in the same manner as in the preparation of the nonaqueous electrolytic solutions Nos. 1-1 to 1-5, the comparative electrolytic solutions Nos. 1-1 to 1-4, and the comparative electrolytic solution No. 0, except that lithium difluorophosphate (LiPO₂F₂) was further added as other additives after the salt compound (1-1-Li) was dissolved so as to have the concentrations shown in Table 4.

### <Examples 5-1 to 5-5, Comparative Examples 5-1 to 5-4, and Comparative Example 0-2>

### (Preparation of Nonaqueous Electrolytic Solutions Nos. 5-1 to 5-5, Comparative Electrolytic Solutions Nos. 5-1 to 5-4, and Comparative Electrolytic Solution No. 0-2)

Nonaqueous electrolytic solutions Nos. 5-1 to 5-5, comparative electrolytic solutions Nos. 5-1 to 5-4, and comparative electrolytic solution No. 0-2 were prepared in the same manner as in the preparation of the nonaqueous electrolytic solutions Nos. 1-1 to 1-5, the comparative electrolytic solutions Nos. 1-1 to 1-4, and the comparative electrolytic solution No. 0, except that ethylene sulfate (Esa) was further added as other additives after the salt compound (1-1-Li) was dissolved so as to have the concentrations shown in Table 5.

### <Examples 6-1 to 6-5, Comparative Examples 6-1 to 6-4, and Comparative Example 0-3>

### (Preparation of Nonaqueous Electrolytic Solutions Nos. 6-1 to 6-5, Comparative Electrolytic Solutions Nos. 6-1 to 6-4, and Comparative Electrolytic Solution No. 0-3)

Nonaqueous electrolytic solutions Nos. 6-1 to 6-5, comparative electrolytic solutions Nos. 6-1 to 6-4, and comparative electrolytic solution No. 0-3 were prepared in the same manner as in the preparation of the nonaqueous electrolytic solutions Nos. 1-1 to 1-5, the comparative electrolytic solutions Nos. 1-1 to 1-4, and the comparative electrolytic solution No. 0, except that lithium difluorophosphate (LiPO₂F₂) and ethylene sulfate (Esa) were further added as other additives after the salt compound (1-1-Li) was dissolved so as to have the concentrations shown in Table 6.

### [Production of Nonaqueous Electrolytic Solution Battery]

Using the nonaqueous electrolytic solution, a nonaqueous electrolytic solution battery (test cell) was produced as follows using LiNi_{0.6}Co_{0.2}Mn_{0.2}O₂ as a positive electrode material and graphite as a negative electrode material.

### (Preparation of Positive Electrode Body)

To 90 mass% of LiNi_{0.6}Co_{0.2}Mn_{0.2}O₂ powder, 5 mass% of polyvinylidene fluoride (hereinafter referred to as "PVDF") as a binder and 5 mass% of acetylene black as a conductive material were mixed, and N-methylpyrrolidone (hereinafter referred to as" NMP ") was further added to form a paste. The paste was applied onto an aluminum foil and dried to obtain a test positive electrode body.

### (Preparation of Negative Electrode Body)

To 90 mass% of graphite powder, 10 mass% of PVDF as a binder was mixed, and NMP was further added to form a slurry. The slurry was applied onto a copper foil and dried at 120°C for 12 hours to obtain a test negative electrode body.

### (Preparation of Nonaqueous Electrolytic Solution Battery)

A nonaqueous electrolytic solution was immersed into a polyethylene separator to assemble a 50 mAh cell of an aluminum laminate exterior.

### [Evaluation]

### <Evaluation 1: Capacity Retention Rate after 500 Cycles at 60°C (High-temperature Cycle Capacity Retention Ratio)>

Each of the nonaqueous electrolytic solution batteries using the nonaqueous electrolytic solution described in Tables 1 to 6 was evaluated as follows.

First, the prepared cell was used to perform conditioning at an environmental temperature of 25°C under the following conditions. That is, as a first charging and discharging, constant current and constant voltage charging was performed at a charging upper limit voltage of 4.3 V and a 0.1 C rate (5 mA), discharging was performed at a constant current of 0.2 C rate (10 mA) up to a discharging termination voltage of 3.0V, then a charging and discharging cycle was repeated three times in which constant current and constant voltage charging was performed at a charging upper limit voltage of 4.3 V and a 0.2 C rate (10 mA), and discharging was performed at a constant current of 0.2 C rate (10 mA) up to a discharging termination voltage of 3.0 V. The capacity obtained at this time was defined as an initial discharging capacity (25°C).

After the conditioning, a charging and discharging test at an environmental temperature of 60°C was performed. The charging and discharging cycle was repeated 500 times in which the constant current and constant voltage charging was performed at a 3 C rate (150mA) up to the charging upper limit voltage of 4.3 V, and discharging was performed at a constant current of 3 C rate (150mA) up to the discharging termination voltage of 3.0 V.

Subsequently, the nonaqueous electrolytic solution battery was cooled to 25°C, and discharged again to 3.0 V, and then the constant current and constant voltage charging was performed at 25°C and a 0.2 C rate up to 4.3 V. Further, at 25°C, discharging was performed at a constant current of 0.2 C rate (10 mA) up to a discharging termination voltage of 3.0 V, and the capacity obtained at this time was defined as a discharging capacity after 500 cycles at 60°C.

Then, the initial discharging capacity obtained as described above and the discharging capacity after 500 cycles at 60°C were used to determine the capacity retention rate after 500 cycles at 60°C from the following formula. Capacity retention rate (%) after 500 cycles at 60°C = (discharging capacity after 500 cycles at 60°C) × 100/initial discharging capacity

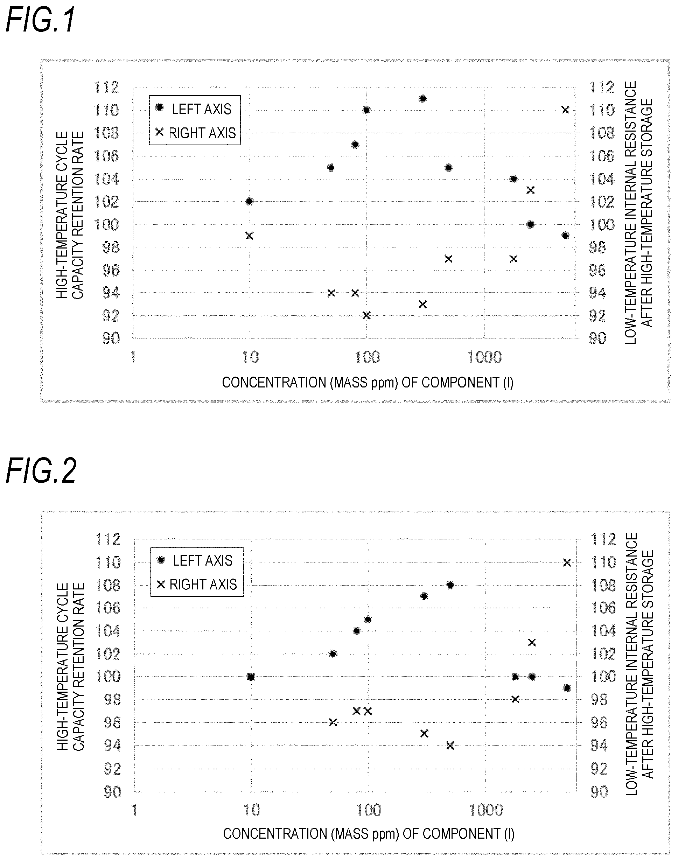

The results of the nonaqueous electrolytic solutions Nos. 1-1 to 1-5 and the comparative nonaqueous electrolytic solutions Nos. 1-1 to 1-4 were compared. More specifically, the results of each of the other examples and comparative examples were expressed as relative values with reference to Comparative Example 0 using the comparative nonaqueous electrolytic solution No. 0, with the capacity retention rate after 500 cycles at 60°C being 100. The results are shown in Table 7 and FIG. 1.

The results of the nonaqueous electrolytic solutions Nos. 2-1 to 2-5 and the comparative nonaqueous electrolytic solutions Nos. 2-1 to 2-4 were compared. More specifically, the results of each of the other examples and comparative examples were expressed as relative values with reference to Comparative Example 0 using the comparative nonaqueous electrolytic solution No. 0, with the capacity retention rate after 500 cycles at 60°C being 100. The results are shown in Table 8 and FIG. 2.

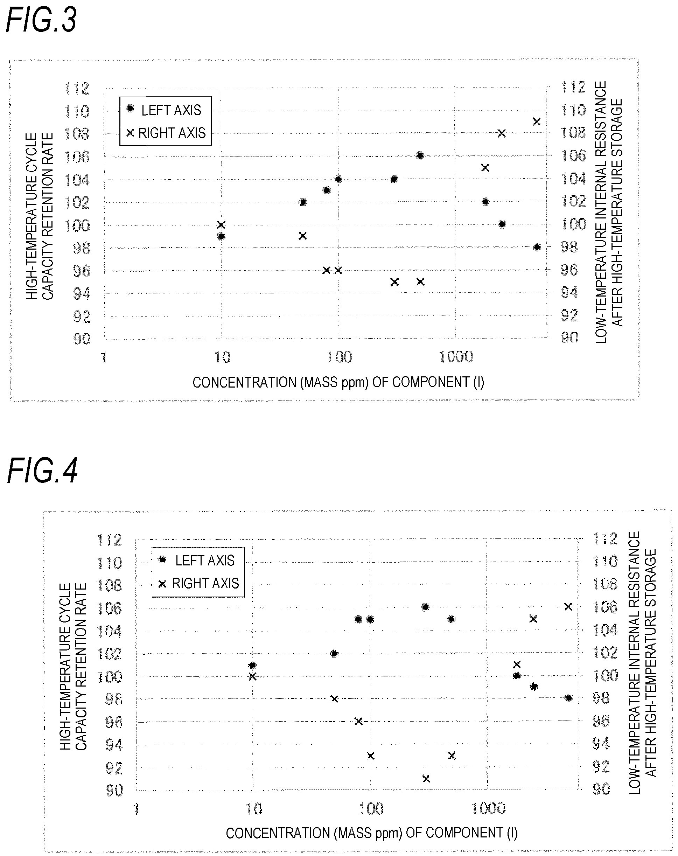

The results of the nonaqueous electrolytic solutions Nos. 3-1 to 3-5 and the comparative nonaqueous electrolytic solutions Nos. 3-1 to 3-4 were compared. More specifically, the results of each of the other examples and comparative examples were expressed as relative values with reference to Comparative Example 0 using the comparative nonaqueous electrolytic solution No. 0, with the capacity retention rate after 500 cycles at 60°C being 100. The results are shown in Table 9 and FIG. 3.

The results of the nonaqueous electrolytic solutions Nos. 4-1 to 4-5 and the comparative nonaqueous electrolytic solutions Nos. 4-1 to 4-4 were compared. More specifically, the results of each of the other examples and comparative examples were expressed as relative values with reference to Comparative Example 0-1 using the comparative nonaqueous electrolytic solution No. 0-1, with the capacity retention rate after 500 cycles at 60°C being 100. The results are shown in Table 10 and FIG. 4.

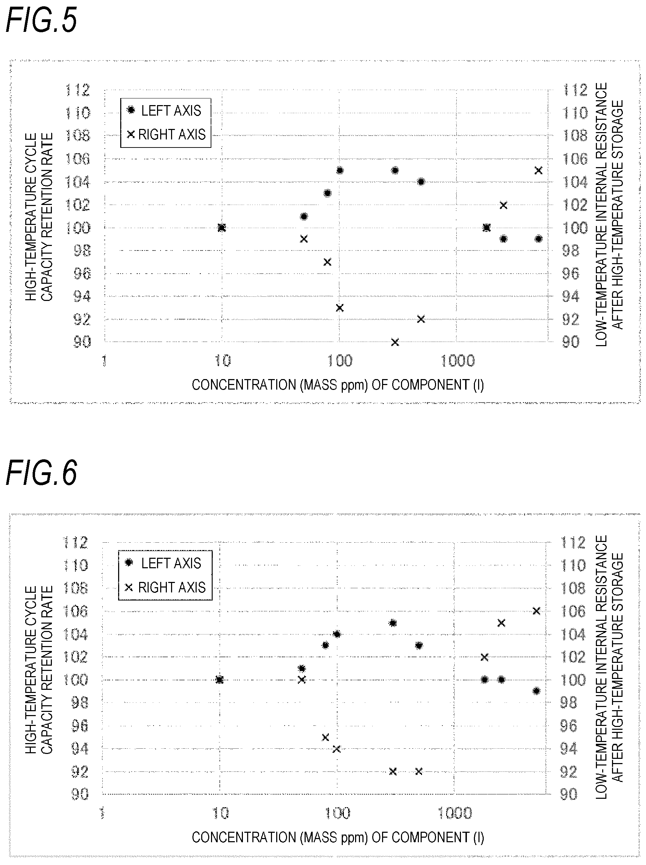

The results of the nonaqueous electrolytic solutions Nos. 5-1 to 5-5 and the comparative nonaqueous electrolytic solutions Nos. 5-1 to 5-4 were compared. More specifically, the results of each of the other examples and comparative examples were expressed as relative values with reference to Comparative Example 0-2 using the comparative nonaqueous electrolytic solution No. 0-2, with the capacity retention rate after 500 cycles at 60°C being 100. The results are shown in Table 11 and FIG. 5.

The results of the nonaqueous electrolytic solutions Nos. 6-1 to 6-5 and the comparative nonaqueous electrolytic solutions Nos. 6-1 to 6-4 were compared. More specifically, the results of each of the other examples and comparative examples were expressed as relative values with reference to Comparative Example 0-3 using the comparative nonaqueous electrolytic solution No. 0-3, with the capacity retention rate after 500 cycles at 60°C being 100. The results are shown in Table 12 and FIG. 6.

A horizontal axis of plots in FIGs. 1 to 6 is a logarithmic scale.

In FIGs. 1 to 6, the concentration of the component (I) on the horizontal axis indicates the concentration of the component (I) with respect to the total amount of the nonaqueous electrolytic solution.

### <Evaluation 2: Measurement of Internal Resistance Value of Nonaqueous Electrolytic Solution Battery after Storage at 60°C for 10 days (Low-temperature Internal Resistance after High-temperature Storage)>

A battery subjected to the same conditioning as in Evaluation 1 described above was charged at a constant current and a constant voltage at a charging upper limit voltage of 4.3 V and a 0.1 C rate (5 mA), taken out from a charging and discharging device maintained at 25°C, placed in a thermostatic chamber at 60°C, and stored for 10 days. Thereafter, the battery was placed in the charging and discharging device maintained at 25°C, and discharging was performed at a constant current of a rate of 0.2 C (10 mA) up to a discharging termination voltage of 3.0 V, and the constant current and a constant voltage charging was performed at a rate of 0.2 C (10 mA) up to a charging upper limit voltage of 4.3 V.

Next, the battery was connected to an electrochemical measurement device (automatic battery evaluation device, manufactured by Electrofield Co., Ltd.) and placed in a thermostatic chamber at -20°C. After being allowed to stand for 1 hour in this state, IV measurement was performed to determine an absolute value of the direct current resistance.

The results of the nonaqueous electrolytic solutions Nos. 1-1 to 1-5 and the comparative nonaqueous electrolytic solutions Nos. 1-1 to 1-4 were compared. More specifically, the results of each of the other examples and comparative examples were expressed as relative values with reference to Comparative Example 0 using the comparative nonaqueous electrolytic solution No. 0, with the absolute value of the direct current resistance being 100. The results are shown in Table 7 and FIG. 1.

The results of the nonaqueous electrolytic solutions Nos. 2-1 to 2-5 and the comparative nonaqueous electrolytic solutions Nos. 2-1 to 2-4 were compared. More specifically, the results of each of the other examples and comparative examples were expressed as relative values with reference to Comparative Example 0 using the comparative nonaqueous electrolytic solution No. 0, with the absolute value of the direct current resistance being 100. The results are shown in Table 8 and FIG. 2.

The results of the nonaqueous electrolytic solutions Nos. 3-1 to 3-5 and the comparative nonaqueous electrolytic solutions Nos. 3-1 to 3-4 were compared. More specifically, the results of each of the other examples and comparative examples were expressed as relative values with reference to Comparative Example 0 using the comparative nonaqueous electrolytic solution No. 0, with the absolute value of the direct current resistance being 100. The results are shown in Table 9 and FIG. 3.

The results of the nonaqueous electrolytic solutions Nos. 4-1 to 4-5 and the comparative nonaqueous electrolytic solutions Nos. 4-1 to 4-4 were compared. More specifically, the results of each of the other examples and comparative examples were expressed as relative values with reference to Comparative Example 0-1 using the comparative nonaqueous electrolytic solution No. 0-1, with the absolute value of the direct current resistance being 100. The results are shown in Table 10 and FIG. 4.

The results of the nonaqueous electrolytic solutions Nos. 5-1 to 5-5 and the comparative nonaqueous electrolytic solutions Nos. 5-1 to 5-4 were compared. More specifically, the results of each of the other examples and comparative examples were expressed as relative values with reference to Comparative Example 0-2 using the comparative nonaqueous electrolytic solution No. 0-2, with the absolute value of the direct current resistance being 100. The results are shown in Table 11 and FIG. 5.

The results of the nonaqueous electrolytic solutions Nos. 6-1 to 6-5 and the comparative nonaqueous electrolytic solutions Nos. 6-1 to 6-4 were compared. More specifically, the results of each of the other examples and comparative examples were expressed as relative values with reference to Comparative Example 0-3 using the comparative nonaqueous electrolytic solution No. 0-3, with the absolute value of the direct current resistance being 100. The results are shown in Table 12 and FIG. 6.

In the following Tables 1 to 6, the concentration of the salt compound represented by the general formula (1), other additives, or other components indicates the concentration with respect to the total amount of the nonaqueous electrolytic solution. In Table 5, Esa represents ethylene sulfate.

**[Table 1]**

| Nonaqueous electrolytic solution No. | (I) Component | | (II) Solute | | (III) Nonaqueous organic solvent | Other additives or component | |
|---|---|---|---|---|---|---|---|
| | Type | Concentration (mass ppm) | Type | Concentration (mol/L) | Type | Type | Concentration (mass%) |
| Comparative 0 | - | - | LiPF₆ | 1.0 | EC/DMC/EMC =2.5/4/3.5 (volume ratio) | - | - |
| Comparative 1-1 | (1-1-Li) | 10 | | | | | |
| 1-1 | | 50 | | | | | |
| 1-2 | | 80 | | | | | |
| 1-3 | | 100 | | | | | |
| 1-4 | | 300 | | | | | |
| 1-5 | | 500 | | | | | |
| Comparative 1-2 | | 1800 | | | | | |
| Comparative 1-3 | | 2500 | | | | | |
| Comparative 1-4 | | 5000 | | | | | |

**[Table 2]**

| Nonaqueous electrolytic solution No. | (I) Component | | (II) Solute | | (III) Nonaqueous organic solvent | Other additives or component | |
|---|---|---|---|---|---|---|---|
| | Type | Concentration (mass ppm) | Type | Concentration (mol/L) | Type | Type | Concentration (mass%) |
| Comparative 0 | - | - | LiPF₆ | | | | |
| Comparative 2-1 | (1-3-Li) | 10 | | | | | |
| 2-1 | | 50 | | | | | |
| 2-2 | | 80 | | | | | |
| 2-3 | | 100 | | 1.0 | EC/DMC/EMC =2.5/4/3.5 (volume ratio) | - | - |
| 2-4 | | 300 | | | | | |
| 2-5 | | 500 | | | | | |
| Comparative 2-2 | | 1800 | | | | | |
| Comparative 2-3 | | 2500 | | | | | |
| Comparative 2-4 | | 5000 | | | | | |

**[Table 3]**

| Nonaqueous electrolytic solution No. | (I) Component | | (II) Solute | | (III) Nonaqueous organic solvent | Other additives or component | |
|---|---|---|---|---|---|---|---|
| | Type | Concentration (mass ppm) | Type | Concentration (mol/L) | Type | Type | Concentration (mass%) |
| Comparative 0 | - | - | LiPF₆ | | | | |
| Comparative 3-1 | (1-6-Li) | 10 | | | | | |
| 3-1 | | 50 | | | | | |
| 3-2 | | 80 | | | | | |
| 3-3 | | 100 | | 1.0 | EC/DMC/EMC =2.5/4/3.5 (volume ratio) | - | - |
| 3-4 | | 300 | | | | | |
| 3-5 | | 500 | | | | | |
| Comparative 3-2 | | 1800 | | | | | |
| Comparative 3-3 | | 2500 | | | | | |
| Comparative 3-4 | | 5000 | | | | | |

**[Table 4]**

| Nonaqueous electrolytic solution No. | (I) Component | | (II) Solute | | (III) Nonaqueous organic solvent | Other additives or component | |
|---|---|---|---|---|---|---|---|
| | Type | Concentration (mass ppm) | Type | Concentration (mol/L) | Type | Type | Concentration (mass%) |
| Comparative 0-1 | - | - | LiPF₆ | | | | |
| Comparative 4-1 | (1-1-Li) | 10 | | | | | |
| 4-1 | | 50 | | | | | |
| 4-2 | | 80 | | | | | |
| 4-3 | | 100 | | 1.0 | EC/DMC/EMC =2.5/4/3.5 (volume ratio) | LiPO₂F₂ | 1.0 |
| 4-4 | | 300 | | | | | |
| 4-5 | | 500 | | | | | |
| Comparative 4-2 | | 1800 | | | | | |
| Comparative 4-3 | | 2500 | | | | | |
| Comparative 4-4 | | 5000 | | | | | |

**[Table 5]**

| Nonaqueous electrolytic solution No. | (I) Component | | (II) Solute | | (III) Nonaqueous organic solvent | Other additives or component | |
|---|---|---|---|---|---|---|---|
| | Type | Concentration (mass ppm) | Type | Concentration (mol/L) | Type | Type | Concentration (mass%) |
| Comparative 0-2 | - | - | LiPF₆ | | | | |
| Comparative 5-1 | (1-1-Li) | 10 | | | | | |
| 5-1 | | 50 | | | | | |
| 5-2 | | 80 | | | | | |
| 5-3 | | 100 | | 1.0 | EC/DMC/EMC =2.5/4/3.5 (volume ratio) | Esa | 1.0 |
| 5-4 | | 300 | | | | | |
| 5-5 | | 500 | | | | | |
| Comparative 5-2 | | 1800 | | | | | |
| Comparative 5-3 | | 2500 | | | | | |
| Comparative 5-4 | | 5000 | | | | | |

**[Table 6]**

| Nonaqueous electrolytic solution No. | (I) Component | | (II) Solute | | (III) Nonaqueous organic solvent | Other additives or component | |
|---|---|---|---|---|---|---|---|
| | Type | Concentration (mass ppm) | Type | Concentration (mol/L) | Type | Type | Concentration (mass%) |
| Comparative 0-3 | - | - | LiPF₆ | | | | |
| Comparative 6-1 | (1-1-Li) | 10 | | | | | |
| 6-1 | | 50 | | | | | |
| 6-2 | | 80 | | | | | |
| 6-3 | | 100 | | 1.0 | EC/DMC/EMC =2.5/4/3.5 (volume ratio) | LiPO₂F₂ Esa | 1.0 |
| 6-4 | | 300 | | | | | |
| 6-5 | | 500 | | | | | |
| Comparative 6-2 | | 1800 | | | | | |
| Comparative 6-3 | | 2500 | | | | | |
| Comparative 6-4 | | 5000 | | | | | |

**[Table 7]**

| | Nonaqueous electrolytic solution No. | High-temperature cycle capacity retention rate | Low-temperature internal resistance after high-temperature storage |
|---|---|---|---|
| Comparative Example 0 (reference) | Comparative 0 | 100 | 100 |
| Comparative Example 1-1 | Comparative 1-1 | 102 | 99 |
| Example 1-1 | 1-1 | 105 | 94 |
| Example 1-2 | 1-2 | 107 | 94 |
| Example 1-3 | 1-3 | 110 | 92 |
| Example 1-4 | 1-4 | 111 | 93 |
| Example 1-5 | 1-5 | 105 | 97 |
| Comparative Example 1-2 | Comparative 1-2 | 104 | 97 |
| Comparative Example 1-3 | Comparative 1-3 | 100 | 103 |
| Comparative Example 1-4 | Comparative 1-4 | 99 | 110 |

**[Table 8]**

| | Nonaqueous electrolytic solution No. | High-temperature cycle capacity retention rate | Low-temperature internal resistance after high-temperature storage |
|---|---|---|---|
| Comparative Example 0 (reference) | Comparative 0 | 100 | 100 |
| Comparative Example 2-1 | Comparative 2-1 | 100 | 100 |
| Example 2-1 | 2-1 | 102 | 96 |
| Example 2-2 | 2-2 | 104 | 97 |
| Example 2-3 | 2-3 | 105 | 97 |
| Example 2-4 | 2-4 | 107 | 95 |
| Example 2-5 | 2-5 | 108 | 94 |
| Comparative Example 2-2 | Comparative 2-2 | 100 | 98 |
| Comparative Example 2-3 | Comparative 2-3 | 100 | 103 |
| Comparative Example 2-4 | Comparative 2-4 | 99 | 110 |

**[Table 9]**

| | Nonaqueous electrolytic solution No. | High-temperature cycle capacity retention rate | Low-temperature internal resistance after high-temperature storage |
|---|---|---|---|
| Comparative Example 0 (reference) | Comparative 0 | 100 | 100 |
| Comparative Example 3-1 | Comparative 3-1 | 99 | 100 |
| Example 3-1 | 3-1 | 102 | 99 |
| Example 3-2 | 3-2 | 103 | 96 |
| Example 3-3 | 3-3 | 104 | 96 |
| Example 3-4 | 3-4 | 104 | 95 |
| Example 3-5 | 3-5 | 106 | 95 |
| Comparative Example 3-2 | Comparative 3-2 | 102 | 105 |
| Comparative Example 3-3 | Comparative 3-3 | 100 | 108 |
| Comparative Example 3-4 | Comparative 3-4 | 98 | 109 |

**[Table 10]**

| | Nonaqueous electrolytic solution No. | High-temperature cycle capacity retention rate | Low-temperature internal resistance after high-temperature storage |
|---|---|---|---|
| Comparative Example 0-1 (reference) | Comparative 0-1 | 100 | 100 |
| Comparative Example 4-1 | Comparative 4-1 | 101 | 100 |
| Example 4-1 | 4-1 | 102 | 98 |
| Example 4-2 | 4-2 | 105 | 96 |
| Example 4-3 | 4-3 | 105 | 93 |
| Example 4-4 | 4-4 | 106 | 91 |
| Example 4-5 | 4-5 | 105 | 93 |
| Comparative Example 4-2 | Comparative 4-2 | 100 | 101 |
| Comparative Example 4-3 | Comparative 4-3 | 99 | 105 |
| Comparative Example 4-4 | Comparative 4-4 | 98 | 106 |

**[Table 11]**

| | Nonaqueous electrolytic solution No. | High-temperature cycle capacity retention rate | Low-temperature internal resistance after high-temperature storage |
|---|---|---|---|
| Comparative Example 0-2 (reference) | Comparative 0-2 | 100 | 100 |
| Comparative Example 5-1 | Comparative 5-1 | 100 | 100 |
| Example 5-1 | 5-1 | 101 | 99 |
| Example 5-2 | 5-2 | 103 | 97 |
| Example 5-3 | 5-3 | 105 | 93 |
| Example 5-4 | 5-4 | 105 | 90 |
| Example 5-5 | 5-5 | 104 | 92 |
| Comparative Example 5-2 | Comparative 5-2 | 100 | 100 |
| Comparative Example 5-3 | Comparative 5-3 | 99 | 102 |
| Comparative Example 5-4 | Comparative 5-4 | 99 | 105 |

**[Table 12]**

| | Nonaqueous electrolytic solution No. | High-temperature cycle capacity retention rate | Low-temperature internal resistance after high-temperature storage |
|---|---|---|---|
| Comparative Example 0-3 (reference) | Comparative 0-3 | 100 | 100 |
| Comparative Example 6-1 | Comparative 6-1 | 100 | 100 |
| Example 6-1 | 6-1 | 101 | 100 |
| Example 6-2 | 6-2 | 103 | 95 |
| Example 6-3 | 6-3 | 104 | 94 |
| Example 6-4 | 6-4 | 105 | 92 |
| Example 6-5 | 6-5 | 103 | 92 |
| Comparative Example 6-2 | Comparative 6-2 | 100 | 102 |
| Comparative Example 6-3 | Comparative 6-3 | 100 | 105 |
| Comparative Example 6-4 | Comparative 6-4 | 99 | 106 |

**[Table 13]**

| | Nonaqueous electrolytic solution No. | High-temperature cycle capacity retention rate | Low-temperature internal resistance after high-temperature storage |
|---|---|---|---|
| Comparative Example 0 (reference) | Comparative 0 | 100 | 100 |
| Example 1-3 | 1-3 | 110 | 92 |
| Example 4-3 | 4-3 | 116 | 86 |
| Example 5-3 | 5-3 | 111 | 89 |
| Example 6-3 | 6-3 | 118 | 85 |

From the results of Tables 7 to 12 and FIGs. 1 to 6, it was confirmed that in Examples in which the content (concentration) of the salt compound (component (I)) represented by the general formula (1) is within the range of the present invention, the effect of improving the capacity retention rate after a long-term cycle at a high temperature and the effect of preventing an increase in internal resistance at a low temperature after high-temperature storage can be exhibited in a balanced manner.

On the other hand, in comparative examples in which the salt compound represented by the general formula (1) was not contained or the content of the salt compound represented by the general formula (1) was out of the range of the present invention, the results were inferior to those of Examples in which the content of the salt compound represented by the general formula (1) was within the range of the present invention.

In Table 13, the results of Examples 1-3, 4-3, 5-3, and 6-3 are relatively compared with reference to Comparative Example 0 with the capacity retention rate after 500 cycles at 60°C being 100, and the results of Examples 1-3, 4-3, 5-3, and 6 -3 are relatively compared with reference to Comparative Example 0 with the low-temperature internal resistance after high-temperature storage being 100.

When at least one of the compound represented by the general formula (2) and the compound represented by the general formula (3) is contained as the other additive, the capacity retention rate after a long-term cycle at a high temperature (60°C or higher) can be further improved, and an increase in resistance at a low temperature (0°C or lower, particularly -20°C or lower) after high-temperature storage can be further prevented, so that it can be seen that it is preferable from the viewpoint that the effect of improving the capacity retention rate after a long-term cycle at a high temperature and the effect of preventing an increase in resistance at a low temperature after high-temperature storage can be further exhibited in a well-balanced manner.

### INDUSTRIAL APPLICABILITY

According to the present invention, it is possible to provide a nonaqueous electrolytic solution and a nonaqueous electrolytic solution battery that can exhibit an effect of improving a capacity retention rate after a long-term cycle at a high temperature (60°C or higher) and an effect of preventing an increase in resistance at a low temperature (0°C or lower, particularly, -20°C or lower) after high-temperature storage in a balanced manner.

This application is based on a Japanese patent application filed on June 5, 2019 (Japanese Patent Application No. 2019-105456).

## Claims

1. A nonaqueous electrolytic solution, comprising:
a salt compound represented by the following general formula (1);
a solute; and
a nonaqueous organic solvent, wherein
a content of the salt compound represented by the general formula (1) with respect to a total amount of the nonaqueous electrolytic solution is 0.003 mass% to 0.070 mass%, and 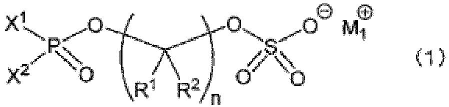
where, R¹ and R² each independently represent a hydrogen atom, a fluorine atom, or an alkyl group having 1 to 6 carbon atoms, and any hydrogen atom of the alkyl group may be substituted with a fluorine atom,
X¹ and X² both represent a fluorine atom,
M₁⁺ represents an alkali metal cation, an ammonium ion, or an organic cation, and
n represents an integer 1 to 6, and when n is an integer of 2 or more, a plurality of R¹ may be the same as or different from each other, and a plurality of R² may be the same as or different from each other.

2. The nonaqueous electrolytic solution according to claim 1, comprising:
a compound represented by the following general formula (2), 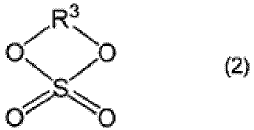
where, R³ represents a hydrocarbon group having 2 to 5 carbon atoms.

3. The nonaqueous electrolytic solution according to claim 1 or 2, comprising:
a compound represented by the following general formula (3), 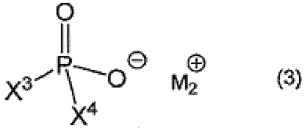
where, X³ and X⁴ both represent a fluorine atom, and M₂⁺ represents an alkali metal cation, an ammonium ion, or an organic cation.

4. The nonaqueous electrolytic solution according to any one of claims 1 to 3, wherein the nonaqueous organic solvent contains at least one selected from the group consisting of a cyclic carbonate and a chain carbonate.

5. The nonaqueous electrolytic solution according to any one of claims 1 to 4, wherein the solute is an ionic salt containing a pair of at least one cation selected from the group consisting of an alkali metal ion and an alkaline earth metal ion, and at least one anion selected from the group consisting of a hexafluorophosphate anion, a tetrafluoroborate anion, a trifluoromethanesulfonate anion, a fluorosulfonate anion, a bis(trifluoromethanesulfonyl)imide anion, a bis(pentafluoroethanesulfonyl)imide anion, a bis(fluorosulfonyl)imide anion, a (trifluoromethanesulfonyl)(fluorosulfonyl)imide anion, a bis(difluorophosphonyl)imide anion, a (difluorophosphonyl)(fluorosulfonyl)imide anion, and a (difluorophosphonyl)(trifluoromethanesulfonyl)imide anion.

6. A nonaqueous electrolytic solution battery, comprising:
a positive electrode;
a negative electrode having at least one selected from the group consisting of a negative electrode material containing a lithium metal and a negative electrode material that can occlude and release lithium, sodium, potassium, or magnesium; and
the nonaqueous electrolytic solution according to any one of claims 1 to 5.

7. The nonaqueous electrolytic solution battery according to claim 6,
wherein the positive electrode contains a lithium-nickel-manganese-cobalt composite oxide as a positive electrode active material.

8. The nonaqueous electrolytic solution battery according to claim 7,
wherein the positive electrode contains LiNi_{0.6}Co_{0.2}Mn_{0.2}O₂ as a positive electrode active material.

9. The nonaqueous electrolytic solution battery according to claim 8,
wherein the positive electrode contains a lithium containing composite oxide represented by the general formula [12] as a positive electrode active material:
Li_{d}NiₑMn_{f}Co_{g}M¹²ₕO₂ [12]
wherein M¹² is at least one element selected from the group consisting of Al, Fe, Mg, Zr, Ti, B, and Sn, d satisfies 0.9 ≤ d ≤ 1.2, and e, f, g, and h satisfy the conditions of e + f + g + h = 1, 0 ≤ e ≤ 0.7, 0 ≤ f ≤ 0.5, 0 ≤ g ≤ 0.5, and h ≥ 0.

10. The nonaqueous electrolytic solution battery according to any one of claims 6 to 9,
wherein the negative electrode contains a graphite.

11. The nonaqueous electrolytic solution battery according to any one of claims 6 to 10,
wherein the negative electrode contains a carbon material having a lattice plane (002) plane with a d value of 0.340 nm or less in X ray diffraction as a negative electrode active material.

## Patentansprüche

1. Nicht-wässrige Elektrolytlösung, umfassend:
eine durch die folgende allgemeine Formel (1) dargestellte Salzverbindung;
einen gelösten Stoff; und
ein nicht-wässriges organisches Lösungsmittel, wobei
ein Gehalt der durch die allgemeine Formel (1) dargestellten Salzverbindung bezogen auf eine Gesamtmenge der nicht-wässrigen Elektrolytlösung 0,003 Massen-% bis 0,0070 Massen-% beträgt, und 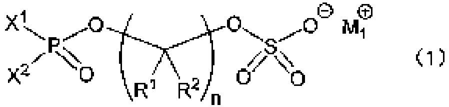
worin R¹ und R² jeweils unabhängig ein Wasserstoffatom, ein Fluoratom oder eine Alkylgruppe, die 1 bis 6 Kohlenstoffatome aufweist, darstellen, und jegliches Wasserstoffatom der Alkylgruppe durch ein Fluoratom ersetzt sein kann,
X¹ und X² beide ein Fluoratom darstellen,
M₁⁺ ein Alkalimetall-Kation, ein Ammonium-Ion oder ein organisches Kation darstellt, und
n eine ganze Zahl von 1 bis 6 darstellt, und wenn n eine ganze Zahl von 2 oder mehr ist, eine Mehrzahl von R¹ gleich oder voneinander verschieden sein können, und eine Mehrzahl von R² gleich oder voneinander verschieden sein können.

2. Nicht-wässrige Elektrolytlösung nach Anspruch 1, umfassend:
eine durch die folgende allgemeine Formel (2) dargestellte Verbindung, 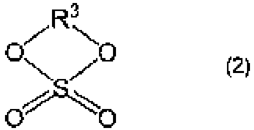
worin R³ eine Kohlenwasserstoffgruppe darstellt, die 2 bis 5 Kohlenstoffatome aufweist.

3. Nicht-wässrige Elektrolytlösung nach Anspruch 1 oder 2, umfassend:
eine durch die folgende allgemeine Formel (3) dargestellte Verbindung, 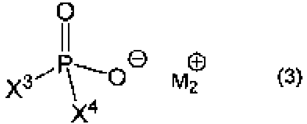
worin X³ und X⁴ beide ein Fluoratom darstellen, und M₂⁺ ein Alkalimetall-Kation, ein Ammonium-Ion oder ein organisches Kation darstellen.

4. Nicht-wässrige Elektrolytlösung nach einem der Ansprüche 1 bis 3, wobei das nicht-wässrige organische Lösungsmittel mindestens eines enthält, welches aus der Gruppe bestehend aus einem zyklischen Carbonat und einem Ketten-Carbonat ausgewählt ist.

5. Nicht-wässrige Elektrolytlösung nach einem der Ansprüche 1 bis 4, wobei der gelöste Stoff ein ionisches Salz ist, das ein Paar von mindestens einem Kation, das aus der Gruppe bestehend aus einem Alkalimetall-Ion und Erdalkalimetall-Ion ausgewählt ist, und mindestens einem Anion, das aus der Gruppe bestehend aus einem Hexafluorophosphat-Anion, einem Tetrafluoroborat-Anion, einem Trifluormethansulfonat-Anion, einem Fluorsulfonat-Anion, einem Bis(trifluormethansulfonyl)imid-Anion, einem Bis(pentafluorethansulfonyl)imid-Anion, einem Bis(fluorsulfonyl)imid-Anion, einem (Trifluormethansulfonyl)(fluorsulfonyl)imid-Anion, einem Bis(difluor-phosphonyl)imid-Anion, einem (Difluorphosphonyl)(fluorsulfonyl)imid-Anion und einem (Difluorphosphonyl)(trifluormethansulfonyl)imid-Anion ausgewählt ist, enthält.

6. Batterie mit nicht-wässriger Elektrolytlösung, umfassend:
eine positive Elektrode;
eine negative Elektrode, die mindestens eines aufweist, welches ausgewählt ist aus der Gruppe bestehend aus einem Negativelektrodenmaterial, das ein Lithiummetall enthält, und einem Negativelektrodenmaterial, das Lithium, Natrium, Kalium oder Magnesium einschließen und freisetzen kann; und
die nicht-wässrige Elektrolytlösung nach einem der Ansprüche 1 bis 5.

7. Batterie mit nicht-wässriger Elektrolytlösung nach Anspruch 6, umfassend:
wobei die positive Elektrode ein Lithium-Nickel-Mangan-Kobalt-Mischoxid als ein Positivelektrodenaktivmaterial enthält.

8. Batterie mit nicht-wässriger Elektrolytlösung nach Anspruch 7,
wobei die positive Elektrode LiNi_{0,6}Co_{0,2}Mn_{0,2}O₂ als ein Positivelektrodenaktivmaterial enthält.

9. Batterie mit nicht-wässriger Elektrolytlösung nach Anspruch 8,
wobei die positive Elektrode ein durch die allgemeine Formel [12] dargestelltes lithiumhaltiges Mischoxid als ein Positivelektrodenaktivmaterial enthält:
Li_{d}NiₑMn_{f}Co_{g}M¹²ₕO₂ [12]
wobei M¹² mindestens ein Element ist, welches aus der Gruppe bestehend aus Al, Fe, Mg, Zr, Ti, B und Sn ausgewählt ist, d 0,9 ≤ d ≤ 1,2 erfüllt, und e, f, g und h die Bedingungen e + f + g + h = 1, 0 ≤ e ≤ 0,7, 0 ≤ f ≤ 0,5, 0 ≤ g ≤ 0,5 und h ≥ 0 erfüllen.

10. Batterie mit nicht-wässriger Elektrolytlösung nach einem der Ansprüche 6 bis 9,
wobei die negative Elektrode einen Graphit enthält.

11. Batterie mit nicht-wässriger Elektrolytlösung nach einem der Ansprüche 6 bis 10,
wobei die negative Elektrode ein Kohlenstoffmaterial, das eine Gitterebenen-(002)-Ebene mit einem d-Wert von 0,340 nm oder weniger in Röntgenbeugung aufweist, als ein Negativelektrodenaktivmaterial enthält.

## Revendications

1. Solution électrolytique non aqueuse, comprenant :
un composé de sel représenté par la formule générale (1) suivante ;
un soluté ; et
un solvant organique non aqueux, dans laquelle
une teneur du composé de sel représenté par la formule générale (1) par rapport à une quantité totale de la solution électrolytique non aqueuse est de 0,003 % en masse à 0,070 % en masse et 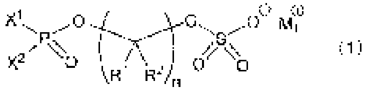 où, R¹ et R² représentent chacun indépendamment un atome d'hydrogène, un atome de fluor ou un groupe alkyle ayant 1 à 6 atomes de carbone et tout atome d'hydrogène du groupe alkyle peut être substitué avec un atome de fluor,
X¹ et X² représentent tous les deux un atome de fluor,
M₁⁺ représente un cation métallique alcalin, un ion ammonium ou un cation organique, et
n représente un nombre entier de 1 à 6 et lorsque n est un nombre entier de 2 ou plus, une pluralité de R¹ peuvent être identiques ou différents les uns des autres et une pluralité de R² peuvent être identiques ou différents les uns des autres.

2. Solution électrolytique non aqueuse selon la revendication 1, comprenant :
un composé représenté par la formule générale (2) suivante, 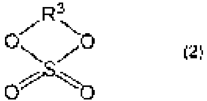
où, R³ représente un groupe hydrocarbure ayant 2 à 5 atomes de carbone.

3. Solution électrolytique non aqueuse selon la revendication 1 ou 2, comprenant :
un composé représenté par la formule générale (3) suivante, 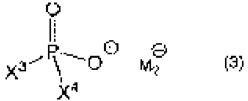
où, X³ et X⁴ représentent tous les deux un atome de fluor et M₂⁺ représente un cation métallique alcalin, un ion ammonium ou un cation organique.

4. Solution électrolytique non aqueuse selon l'une quelconque des revendications 1 à 3, dans laquelle le solvant organique non aqueux contient au moins un choisi dans le groupe constitué par un carbonate cyclique et un carbonate à chaîne.

5. Solution électrolytique non aqueuse selon l'une quelconque des revendications 1 à 4, dans laquelle le soluté est un sel ionique contenant une paire d'au moins un cation choisi dans le groupe constitué par un ion métallique alcalin et un ion métallique alcalino-terreux et au moins un anion choisi dans le groupe constitué par un anion hexafluorophosphate, un anion tétra-fluoroborate, un anion trifluorométhanesulfonate, un anion fluorosulfonate, un anion bis(trifluorométhanesulfonyl)imide, un anion bis(pentafluoroé-thanesulfonyl)imide, un anion bis(fluorosulfonyl)imide, un anion (trifluoromé-thanesulfonyl)(fluorosulfonyl)imide, un anion bis(difluorophosphonyl)imide, un anion (difluorophosphonyl)(fluorosulfonyl)imide, et un anion (difluoro-phosphonyl)(trifluorométhanesulfonyl)imide.

6. Batterie à solution électrolytique non aqueuse, comprenant :
une électrode positive ;
une électrode négative ayant au moins un choisi dans le groupe constitué par un matériau d'électrode négative contenant un métal lithium et un matériau d'électrode négative qui peut boucher et libérer du lithium, du sodium, du potassium ou du magnésium ; et
la solution électrolytique non aqueuse selon l'une quelconque des revendications 1 à 5.

7. Batterie à solution électrolytique non aqueuse selon la revendication 6, dans laquelle l'électrode positive contient un oxyde composite de lithium-nickel-manganèse-cobalt comme matériau actif d'électrode positive.

8. Batterie à solution électrolytique non aqueuse selon la revendication 7, dans laquelle l'électrode positive contient LiNi_{0,6}Co_{0,2}Mn_{0,2}O₂ comme matériau actif d'électrode positive.

9. Batterie à solution électrolytique non aqueuse selon la revendication 8,
dans laquelle l'électrode positive contient un oxyde composite contenant du lithium représenté par la formule générale [12] comme matériau actif d'électrode positive :
Li_{d}NiₑMn_{f}Co_{g}M¹²ₕO₂ [12]
dans laquelle M₁₂ est au moins un élément choisi dans le groupe constitué par AI, Fe, Mg, Zr, Ti, B, et Sn, d satisfait 0,9 ≤ d ≤ 1,2, et e, f, g, et h satisfont les conditions de e + f + g + h = 1,0 ≤ e ≤ 0,7, 0 ≤ f ≤ 0,5, 0 ≤ g ≤ 0,5, et h ≥ 0.

10. Batterie à solution électrolytique non aqueuse selon l'une quelconque des revendications 6 à 9,
dans laquelle l'électrode négative contient un graphite.

11. Batterie à solution électrolytique non aqueuse selon l'une quelconque des revendications 6 à 10,
dans laquelle l'électrode négative contient un matériau de carbone ayant un plan [[002] de plan de maillage avec une valeur d de 0,340 nm ou moins en diffraction aux rayons X comme matériau actif d'électrode négative.
